(19) **Europäisches Patentamt / European Patent Office / Office européen des brevets**

(11) **EP 4 322 592 A1**

(12) **EUROPEAN PATENT APPLICATION**
published in accordance with Art. 153(4) EPC

(43) Date of publication:
**14.02.2024 Bulletin 2024/07**

(21) Application number: **22794767.8**

(22) Date of filing: **22.04.2022**

(51) International Patent Classification (IPC):
**H04W 24/02** (2009.01)

(52) Cooperative Patent Classification (CPC):
**H04W 24/02; H04W 24/08**

(86) International application number:
**PCT/CN2022/088401**

(87) International publication number:
**WO 2022/228296 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2021 CN 202110456293**
**29.06.2021 CN 202110727648**

(71) Applicant: **Huawei Technologies Co., Ltd.**
**Longgang**
**Shenzhen, Guangdong 518129 (CN)**

(72) Inventors:
• **HU, Mengshi**
**Shenzhen, Guangdong 518129 (CN)**
• **SUN, Yingxiang**
**Shenzhen, Guangdong 518129 (CN)**
• **LIU, Chenchen**
**Shenzhen, Guangdong 518129 (CN)**
• **HAN, Xiao**
**Shenzhen, Guangdong 518129 (CN)**
• **DU, Rui**
**Shenzhen, Guangdong 518129 (CN)**
• **ZHANG, Meihong**
**Shenzhen, Guangdong 518129 (CN)**
• **YANG, Xun**
**Shenzhen, Guangdong 518129 (CN)**

(74) Representative: **Maiwald GmbH**
**Engineering**
**Elisenhof**
**Elisenstrasse 3**
**80335 München (DE)**

(54) **COMMUNICATION METHOD AND APPARATUSES**

(57) Embodiments of this application provide a communication method and apparatus, to improve robustness of a communication process and improve accuracy of a sensing result. The communication method includes: generating a first physical layer protocol data unit PPDU, where the first PPDU includes a first field, and the first field indicates that a variation of a channel state does not exceed a threshold; and sending the first PPDU.

First communication apparatus     Second communication apparatus

S601: Second physical layer protocol data unit PPDU

S602: Generate a first physical layer protocol data unit PPDU including a first field

S603: First physical layer protocol data unit PPDU

S604: Determine whether a change degree of a channel state meets a threshold condition

FIG. 6

**Description**

**CROSS-REFERENCE TO RELATED APPLICATIONS**

This application claims priority to Chinese Patent Application No. 202110456293.4, filed with the China National Intellectual Property Administration on April 26, 2021 and entitled "COMMUNICATION METHOD AND APPARATUS", which is incorporated herein by reference in its entirety. This application claims priority to Chinese Patent Application No. 202110727648.9, filed with the China National Intellectual Property Administration on June 29, 2021 and entitled "COMMUNICATION METHOD AND APPARATUS", which is incorporated herein by reference in its entirety.

**TECHNICAL FIELD**

This application relates to the field of wireless communication technologies, and in particular, to a communication method and apparatus.

**BACKGROUND**

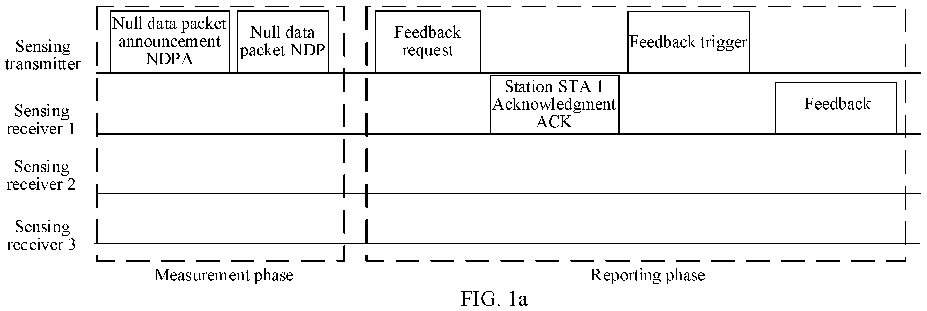

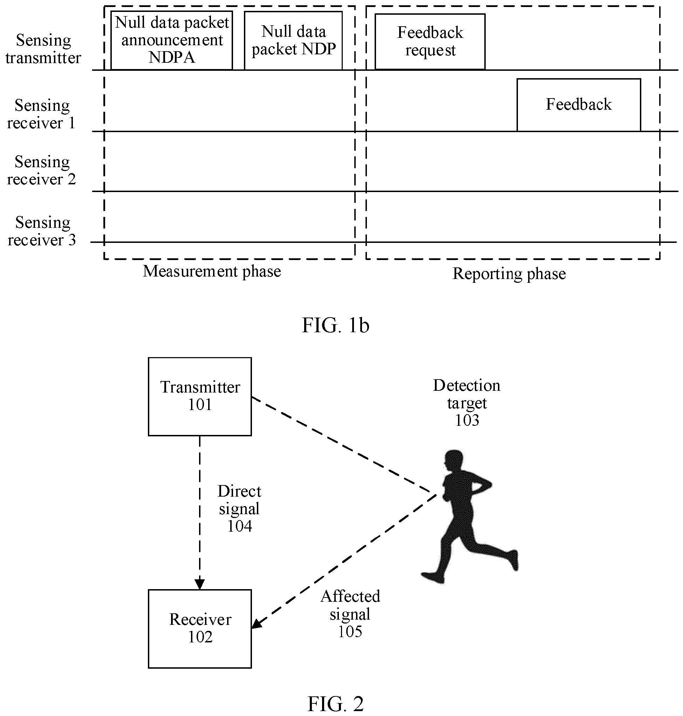

In a wireless passive sensing process, as shown in FIG. 1a and FIG. 1b, a sensing transmitter (Sensing Transmitter) sends a null data packet announcement (null data packet announcement, NDPA) and a null data packet (null data packet, NDP), and one or more sensing receivers (Sensing Receivers) measure channel state information (channel state information, CSI).

In FIG. 1a, the sensing transmitter sends a feedback request (Feedback request). If learning through measurement that a variation of the CSI meets a threshold condition, a sensing receiver 1 sends acknowledgment (ACK) information of a station (station, STA) 1. The sensing transmitter sends a feedback trigger (Feedback Trigger). The sensing receiver 1 sends feedback information (Feedback). In FIG. 1b, the sensing transmitter sends a feedback request. If learning through measurement that a variation of the CSI meets a threshold condition, the sensing receiver 1 sends a feedback. In other words, when the threshold condition is met, the sensing receiver considers that the variation of the CSI is great, and feeds back the ACK or the feedback. When the threshold condition is not met, the sensing receiver considers that the variation of the CSI is small, and does not provide the feedback. In this way, if receiving the ACK or the feedback, the sensing transmitter may determine that the sensing receiver 1 learns through measurement that the variation of the CSI measured is great. If receiving no ACK or feedback, the sensing transmitter may determine that sensing receiver 1 learns through measurement that the variation of the CSI is small.

However, due to factors such as poor channel quality, packet loss, and the like, the sensing receiver may send information such as the ACK, the feedback, or the like, but the information is not received by the sensing transmitter. Alternatively, the sensing receiver receives no feedback request, and therefore does not send the information such as the ACK, the feedback, or the like. Consequently, when receives no information, the sensing transmitter may incorrectly consider that the variation of the CSI is small, and consequently, the sensing transmitter cannot accurately perform sensing.

**SUMMARY**

This application provides a communication method and apparatus, to improve sensing accuracy.

According to a first aspect, a communication method is provided. In the method, a first communication apparatus generates a first physical layer protocol data unit PPDU. The first PPDU includes a first field. The first field indicates that a variation of a channel state does not exceed a threshold. The first communication apparatus sends the first PPDU, and a second communication apparatus receives the first PPDU. The second communication apparatus may determine that the variation of the channel state does not exceed the threshold.

In the communication method, that the first communication apparatus is a receiver, and the second communication apparatus is a transmitter is used for description. The receiver may be an access point AP or a station STA, and the transmitter may be an AP or a STA. The first field is set to indicate that the variation of the channel state does not exceed the threshold, so that the transmitter may determine, based on a received feedback, that the variation of the channel state is small. Therefore, accuracy of identifying the feedback by the transmitter can be improved, robustness of a communication system can be improved, and accuracy of a sensing result can be further improved.

In a possible design, the first field alternatively indicates that a variation of a channel state exceeds a threshold, and a second communication apparatus may further determine that the variation of the channel state exceeds the threshold. The first field may be alternatively set to indicate that the variation of the channel state exceeds the threshold, so that the transmitter may determine, based on a received feedback, that the variation of the channel state is large. In addition, when receiving no feedback, the transmitter may also determine that the transmitter receives no information fed back by the receiver. Therefore, accuracy of identifying the feedback by the transmitter can be further improved, and accuracy of a sensing result can be further improved.

In a possible design, when the first field indicates that the variation of the channel state does not exceed the threshold, the first field may indicate a number of first long training field symbols, and the number of first long training field symbols indicates that the variation of the channel state does not exceed the threshold; or the first field may indicate a length of a first padding field, and the length of the first padding field indicates that the variation of the channel state does not exceed the threshold; or the first field may be a second long training field, and information carried on a subcarrier of the second long training field indicates that the variation of the channel state does not exceed the threshold; or the first field may indicate a size of a third long training field, and the size of the third long training field indicates that the variation of the channel state does not exceed the threshold. The first field may be set to implicitly indicate that the variation of the channel state does not exceed the threshold. Therefore, the accuracy of identifying the feedback by the transmitter is improved.

In a possible design, when the first field indicates that the variation of the channel state does not exceed the threshold, the first field may include negative acknowledgment information, and the negative acknowledgment information indicates that the variation of the channel state does not exceed the threshold. The first field may be set to explicitly indicate that the variation of the channel state does not exceed the threshold. Therefore, the accuracy of identifying the feedback by the transmitter is improved.

For example, the negative acknowledgment information may be non-acknowledgment (NACK) information or not met (Not met) information.

Optionally, the negative acknowledgment information may be carried in a preamble of the first PPDU, or the negative acknowledgment information may be carried in a MAC frame of the first PPDU.

In a possible design, if meeting any one of the following cases, the number of first long training field symbols indicates that the variation of the channel state does not exceed the threshold, where the cases include: The number of first long training field symbols is less than a number of space-time streams NSTS; the number of first long training field symbols is less than a number of spatial streams NSS; the number of first long training field symbols is included in a first set; the number of first long training field symbols is included in a second set, and the NSTS is included in a third set; and the number of first long training field symbols is included in a fourth set, and the NSS is included in a fifth set.

Alternatively, when being greater than or equal to an NSTS, the number of first long training field symbols may indicate that the variation of the channel state does not exceed the threshold. Alternatively, when being greater than or equal to an NSS, the number of first long training field symbols may indicate that the variation of the channel state does not exceed the threshold.

In a possible design, when the first field alternatively indicates that the variation of the channel state exceeds the threshold, the first field may indicate a number of first long training field symbols, and the number of first long training field symbols indicates that the variation of the channel state exceeds the threshold; or the first field may indicate a length of a first padding field, and the length of the first padding field indicates that the variation of the channel state exceeds the threshold; or the first field may be a second long training field, and information carried on a subcarrier of the second long training field indicates that the variation of the channel state exceeds the threshold; or the first field may indicate a size of a third long training field, and the size of the third long training field indicates that the variation of the channel state exceeds the threshold. The first field may be set to implicitly indicate that the variation of the channel state exceeds the threshold. Therefore, the accuracy of identifying the feedback by the transmitter is improved.

In a possible design, when the first field indicates that the variation of the channel state exceeds the threshold, the first field may include acknowledgment information, and the acknowledgment information indicates that the variation of the channel state does not exceed the threshold. The first field may be set to explicitly indicate that the variation of the channel state does not exceed the threshold. Therefore, the accuracy of identifying the feedback by the transmitter is improved.

For example, the acknowledgment information may be acknowledgment (ACK) information or met (Met) information.

Optionally, the acknowledgment information may be carried in a preamble of the first PPDU, or the negative acknowledgment information may be carried in a MAC frame of the first PPDU.

In a possible design, if meeting any one of the following cases, the number of first long training field symbols indicates that the variation of the channel state exceeds the threshold, where the cases include: The number of first long training field symbols is greater than an NSTS; the number of first long training field symbols is greater than an NSS; the number of first long training field symbols is included in a sixth set; the number of first long training field symbols is included in a seventh set, and the NSTS is included in an eighth set; and the number of first long training field symbols is included in a ninth set, and the NSS is included in a tenth set.

Alternatively, when being less than or equal to an NSTS, the number of first long training field symbols may indicate that the variation of the channel state exceeds the threshold. Alternatively, when being less than or equal to an NSS, the number of first long training field symbols may indicate that the variation of the channel state exceeds the threshold.

In a possible design, when the first field indicates the number of first long training field symbols, the first field may be an NSTS field, and the NSTS field indicates the number of first long training field symbols; or the first field may be a number of extremely high throughput long training field symbols Number of EHT-LTF Symbols field, and the number of EHT-LTF symbols field indicates the number of first long training field symbols; or the first field may be an NSTS and midamble periodicity NSTS And Midamble Periodicity field, and the NSTS and midamble periodicity field indicates the number of first long training field symbols; or the first field may include a modulation and coding scheme MCS field, and the MCS field indicates the number of first long training field symbols; or the first field may include an MCS field and a space-time block code STBC field, and the MCS field and the STBC field indicate the number of first long training field symbols; or the first field may include an MCS field, an STBC field, and a number of extension spatial streams NESS field, and the MCS field, the STBC field, and the NESS field indicate the number of first long training field symbols.

In a possible design, the first PPDU may be a null data packet NDP, or the first PPDU may include a media access control MAC frame. There is no data field in the NDP, so that feedback overheads can be reduced and feedback efficiency can be improved.

In a possible design, the first PPDU includes the MAC frame, and the MAC frame further includes the variation of the channel state. This can further improve sensing accuracy.

In a possible design, the second communication apparatus sends a second PPDU, and the first communication apparatus receives the second PPDU. The second PPDU may indicate to provide a feedback when the variation of the channel state does not exceed the threshold. The first communication apparatus may set, based on an indication of the second PPDU, the first field to indicate that the variation of the channel state does not exceed the threshold. Therefore, the accuracy of identifying the feedback by the transmitter is improved.

In a possible design, the second PPDU may further indicate to provide a feedback when the variation of the channel state exceeds the threshold. The first communication apparatus may set, based on an indication of the second PPDU, the first field to indicate that the variation of the channel state exceeds the threshold. Therefore, the accuracy of identifying the feedback by the transmitter is improved.

According to a second aspect, a communication apparatus is provided, and is configured to implement the foregoing method. The communication apparatus may be the first communication apparatus in the first aspect, or an apparatus including the first communication apparatus, or an apparatus included in the first communication apparatus, for example, a chip. Alternatively, the communication apparatus may be the second communication apparatus in the first aspect, or an apparatus including the second communication apparatus, or an apparatus included in the second communication apparatus. The communication apparatus includes a corresponding module, unit, or means (means) for implementing the foregoing method. The module, unit, or means may be implemented by hardware, software, or hardware executing corresponding software. The hardware or software includes one or more modules or units corresponding to the foregoing functions. For example, a processing module and a transceiver module that are coupled to each other are included.

According to a third aspect, a communication apparatus is provided. The communication apparatus may be the first communication apparatus or the second communication apparatus in the first aspect, or may be a chip disposed in the first communication apparatus or the second communication apparatus in the first aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first communication apparatus or the second communication apparatus in the first aspect.

It should be understood that the communication interface may be implemented via an antenna, a feeder, a codec, and the like in the communication apparatus. Alternatively, if the communication apparatus is the chip disposed in the first communication apparatus or the second communication apparatus, the communication interface may be an input/output interface of the chip, for example, an input/output pin. The communication apparatus may further include a transceiver, and the transceiver is used by the communication apparatus to communicate with another device. For example, when the communication apparatus is the first communication apparatus, the another device is the second communication apparatus. Alternatively, when the communication apparatus is the second communication apparatus, the another device is the first communication apparatus.

According to a fourth aspect, a chip system is provided. The chip system includes a processor, and may further include a memory. The chip system is configured to implement the method performed by the first communication apparatus or the second communication apparatus in the first aspect. In a possible implementation, the chip system further includes the memory, configured to store program instructions and/or data. The chip system may include a chip, or may include a chip and another discrete component.

According to a fifth aspect, a computer-readable storage medium is provided. The computer-readable storage medium stores a computer program. When the computer program is run, the method performed by the first communication apparatus in the first aspect is implemented, or the method performed by the second communication apparatus in the first aspect is implemented.

According to a sixth aspect, a computer program product is provided. The computer program product includes computer program code. When the computer program code is run, the method performed by the first communication apparatus in the first aspect is performed, or the method performed by the second communication apparatus in the first aspect is performed.

According to a seventh aspect, a communication system is provided. The communication system includes the first communication apparatus in the first aspect and the second communication apparatus in the first aspect.

For technical effects brought by any design manner of the second aspect to the seventh aspect, refer to the technical effects brought by different design manners of the first aspect. Details are not described herein again.

## BRIEF DESCRIPTION OF DRAWINGS

FIG. 1a is a schematic diagram of a sensing process;
FIG. 1b is a schematic diagram of a sensing process;
FIG. 2 is a schematic diagram of a sensing system according to an embodiment of this application;
FIG. 3 is a schematic diagram of a communication system according to an embodiment of this application;
FIG. 4a is a schematic diagram of a communication system in a home environment according to an embodiment of this application;
FIG. 4b is a schematic diagram of a communication system in an office environment according to an embodiment of this application;
FIG. 5 is a schematic diagram of functional modules of a main control node and a measurement node according to an embodiment of this application;
FIG. 6 is a schematic diagram of a communication process according to an embodiment of this application;
FIG. 7a is a schematic diagram of a structure of a PPDU frame according to an embodiment of this application;
FIG. 7b is a schematic diagram of a structure of a PPDU frame according to an embodiment of this application;
FIG. 7c is a schematic diagram of a structure of a PPDU frame according to an embodiment of this application;
FIG. 7d is a schematic diagram of a structure of a PPDU frame according to an embodiment of this application;
FIG. 7e is a schematic diagram of a structure of a PPDU frame according to an embodiment of this application;
FIG. 7f is a schematic diagram of a structure of a PPDU frame according to an embodiment of this application;
FIG. 8a is a schematic diagram of a sensing process according to an embodiment of this application;
FIG. 8b is a schematic diagram of a sensing process according to an embodiment of this application;
FIG. 8c is a schematic diagram of a sensing process according to an embodiment of this application;
FIG. 9 is a schematic diagram of a frame structure according to an embodiment of this application;
FIG. 10a is a schematic diagram of a sensing process according to an embodiment of this application;
FIG. 10b is a schematic diagram of a sensing process according to an embodiment of this application;
FIG. 10c is a schematic diagram of a sensing process according to an embodiment of this application;
FIG. 10d is a schematic diagram of a sensing process according to an embodiment of this application;
FIG. 11 is a schematic diagram of a structure of a communication apparatus according to an embodiment of this application; and
FIG. 12 is a schematic diagram of a structure of a communication apparatus according to an embodiment of this application.

## DESCRIPTION OF EMBODIMENTS

The following further describes this application in detail with reference to accompanying drawings.

All aspects, embodiments, or features are presented in this application by describing a system that may include a plurality of devices, assemblies, modules, and the like. It should be appreciated and understood that each system may include another device, assembly, module, and the like, and/or may not include all devices, assemblies, modules, and the like discussed with reference to the accompanying drawings. In addition, a combination of these solutions may be used.

In addition, in embodiments of this application, the term "example" is used to represent giving an example, an illustration, or a description. Any embodiment or design solution described as an "example" in this application should not be explained as being more preferred or having more advantages than another embodiment or design solution. Exactly, use of the term "example" is intended to present a concept in a specific manner.

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

Embodiments of this application may be applied to a wireless local area network (wireless local area network, WLAN) scenario, and may be applied to an institute of electrical and electronics engineers (institute of electrical and electronics engineers, IEEE) 802.11 system standard, for example, 802.11a/b/g, 802.11n, 802.11ac, 802.11ax, or a next-generation standard, for example, 802.11be or a further next-generation standard, or may be applied to 802.11bf. Alternatively, embodiments of this application may be applicable to a wireless local area network system, for example, an internet of things (internet of things, IoT) network or a vehicle to everything (Vehicle to X, V2X) network. Certainly, embodiments of this application may be further applied to another possible communication system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation mobile communication technology (5th generation, 5G) communication system, and a future communication system.

The following describes some terms in embodiments of this application, to facilitate understanding of a person skilled in the art.

(1) Wireless passive sensing is a technology that uses an impact of an object on a radio wave to sense existence, an action, a movement, and the like of the object.

With development of communication technologies, for example, a WLAN, a 4th generation mobile communication technology (4th generation, 4G), 5G, and the like, various wireless communication devices have been widely deployed in people's daily life. The wireless communication device may include a mobile phone, a computer, a wireless router, a smart home device, a wireless sensor, a wireless router, and the like. For example, there are usually several, dozens of, or even hundreds of wireless communication devices in a home environment, and these wireless communication devices are very closed to a user and an object such as furniture or the like in the home environment. In a process in which these wireless communication devices communicate in a wireless manner, interference of a human body/the object to a radio wave is sensed. Therefore, the human body/object may be sensed by using such interference. This is a working principle of the wireless passive sensing technology. Simply, the wireless passive sensing technology uses a principle similar to a "human body radar" to sense a surrounding human body or object.

In a WLAN scenario, the wireless passive sensing technology may be a WLAN sensing (Sensing) technology. The following mainly describes an example in which embodiments of this application are applied to a WLAN scenario.

(2) A sensing transmitter is a device that sends, in a sensing process, a signal for sensing measurement. The transmitter may also be referred to as a signal transmitter or a transmitting end.

The transmitter may be a wireless access point (access point, AP) or a station (station, STA).

(3) A sensing receiver is a device that receives, in a sensing process, a signal for sensing measurement, and performs sensing measurement. The receiver may also be referred to as a signal receiver or a receiving end.

The receiver may be an AP or a STA.

(4) The STA in embodiments of this application may be a user terminal, a user apparatus, an access apparatus, a subscriber station, a subscriber unit, a mobile station, a user agent, a user device, or another device that has a wireless communication function. The user terminal may be a device having a wireless communication function, for example, a handheld device, a vehicle-mounted device, a wearable device, a computing device, and another processing device connected to a wireless modem. The user terminal may alternatively be user equipment (user equipment, UE), a mobile station (mobile station, MS), a terminal (terminal), terminal equipment (terminal equipment), a portable communication device, a handheld device, a portable computing device, an entertainment device, a game device or system, a global positioning system device, any other suitable device in various forms configured to perform network communication via wireless media, or the like. For example, the STA may be a communication server, a router, a switch, a bridge, or the like. Herein, for ease of description, the devices mentioned above are collectively referred to as a station or a STA.

The AP and the STA in embodiments of this application may be an AP and a STA that are applicable to an IEEE 802.11 system standard. The AP is an apparatus that is deployed in a wireless communication network and that provides a wireless communication function for a STA associated with the AP. The AP may be used as a hub of the communication system, and is usually a network-side product that supports media access control (media access control, MAC) and a physical layer (physical, PHY) in the 802.11 system standard. For example, the AP may be a communication device such as a base station, a router, a gateway, a repeater, a communication server, a switch, a bridge, or the like. The base station may include various forms of macro base stations, micro base stations, relay stations, and the like. Herein, for ease of description, the devices mentioned above are collectively referred to as an AP. The STA is generally a terminal product that supports the MAC and the PHY in the 802.11 system standard, for example, a mobile phone, a notebook computer, or the like.

(5) CSI is a channel measurement result obtained by a receiver measuring a training packet sent by a transmitter, and may be used to reflect a status of a (radio) channel of a link between the receiver and the transmitter.

In a WLAN protocol, channel state information is a CSI matrix corresponding to a subcarrier packet obtained by measuring each orthogonal frequency division multiplexing (orthogonal frequency division multiplexing, OFDM) subcarrier packet. A size of a full-dimensional CSI matrix is a value obtained by multiplying a quantity of transmitting antennas by a quantity of receiving antennas. Each matrix element is a complex number including a real part and an imaginary part. When there are a large quantity of antennas and a large quantity of subcarriers, an overall data amount of uncompressed CSI is also large.

When measuring the channel, the transmitter includes training symbols in the training packet. The receiver performs channel measurement based on structures of the training symbols. Alternatively, the training packet may not include training symbols.

"And/or" in this application describes an association relationship between associated objects and represents that three relationships may exist. For example, A and/or B may represent the following three cases: Only A exists, both A and B exist, and only B exists. A character "/" generally indicates an "or" relationship between associated objects.

"A plurality of" in this application means two or more.

In addition, it should be understood that in the description of this application, terms such as "first" and "second" are only used for distinguishing and description, but cannot be understood as indication or implication of relative importance, and cannot be understood as an indication or implication of a sequence.

FIG. 2 is a diagram of an architecture of a sensing system to which an embodiment of this application is applicable. The sensing system includes one or more transmitters (for example, a transmitter 101 in FIG. 2) and one or more receivers (for example, a receiver 102 in FIG. 2). The transmitter and the receiver may be disposed in a same physical device, or may be disposed in different physical devices.

In a sensing process, the transmitter 101 sends a signal, and the receiver 102 receives the signal. The signal received by the receiver 102 may include a direct signal 104 (which is a signal that is not affected by a detection target 103) and an affected signal 105 (which is a signal that is affected by the detection target 103). When the detection target 103 moves, the affected signal 105 changes. A superimposed radio signal of the direct signal 104 and the affected signal 105 received by the receiver 102 also changes accordingly. In this way, the receiver 103 detects that a radio channel changes.

The radio channel is quantized into CSI, and the CSI may be used to reflect a status of the radio channel. A change of the radio channel is represented by an amplitude change and a phase change of the CSI.

The receiver 102 may determine, based on two measurement results of the CSI and one threshold condition, a magnitude of a variation of the CSI, in other words, a magnitude of a variation of the channel. For example, when the variation of the CSI meets the threshold condition, the receiver 102 determines that the variation of the CSI is great. When the variation of the CSI does not meet the threshold condition, the receiver 102 determines that the variation of the CSI is small. When the variation of the CSI is great, the receiver 101 may further interact with the receiver 102, to implement more accurate sensing.

Compared with sensing via a wearable device such as a camera a wristband, or the like, wireless passive sensing does not need additional hardware costs, and users do not need to wear a device. This facilitates monitoring of elderly people and children, and can detect a possible intruded theft and the like. In addition, the wireless passive sensing technology has little impact on user privacy and can monitor areas such as a bedroom, a bathroom, and the like, to achieve more comprehensive protection. In addition, the wireless passive sensing technology can perform effectively sensing even in a poor lighting condition, for example, there are obstacles (such as a curtain, wooden furniture, and the like), and can also perform multi-room sensing across walls. In addition, the wireless passive sensing technology has high sensing precision, and can perform gesture recognition and monitor breathing, sleep, or the like.

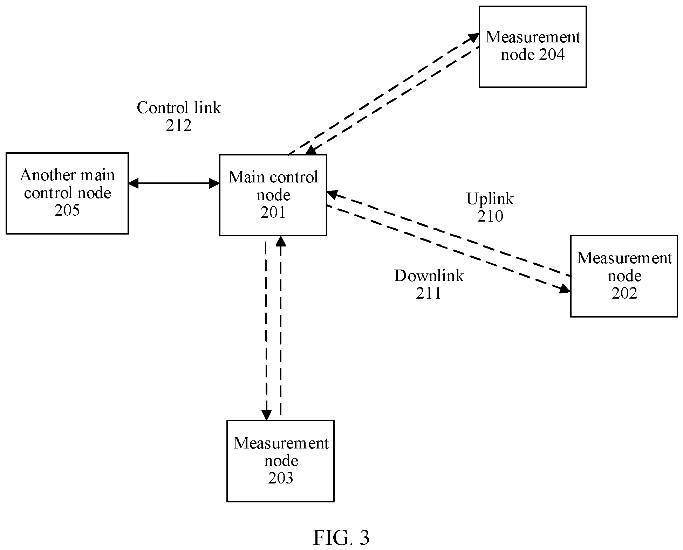

FIG. 3 is a diagram of an architecture of a communication system to which an embodiment of this application is applicable. The communication system includes one or more main control nodes, for example, a main control node 201 and another main control node 205 in FIG. 3. The communication system further includes one or more measurement nodes, for example, a measurement node 202, a measurement node 203, and a measurement node 204 in FIG. 3. A link for sending of the measurement node and for receiving of the main control node is referred to as an uplink 210. A link for sending of the main control node and for receiving of the measurement node is referred to as a downlink 211. The main control node 201 interacts with the another main control node 205 through a control link 212. The control link 212 may be connected in a wired Ethernet or wireless network manner, and may be configured to coordinate different main control nodes to perform detection.

The main control node may be a network element that supports Wi-Fi or another wireless network protocol. For example, the main control node may be deployed in a WLAN AP or a smart home control center. The measurement node may be a mobile device such as a mobile phone, or may be a device integrated with a WLAN function, such as a printer, a smart printer, a smart light, or the like. The main control node may interact with the measurement node by using a wireless network protocol (such as the Wi-Fi protocol). The main control node may send a downlink measurement packet to the measurement node, and coordinate the measurement node to measure CSI, to obtain existence and motion of a surrounding human body/an object by using the CSI.

In a sensing process, a transmitter may be the main control node or the measurement node, and a receiver may be the main control node or the measurement node. In other words, the main control node may be the transmitter or the receiver in the sensing process. The measurement node may be the transmitter or the receiver in the sensing process. Certainly, it is possible that the main control node may not be the transmitter or the receiver, but may control a plurality of measurement nodes to separately serve as the transmitter, the receiver, and the like. This is not limited in embodiments of this application.

The communication system shown in FIG. 3 may be applied to a home scenario and an office scenario.

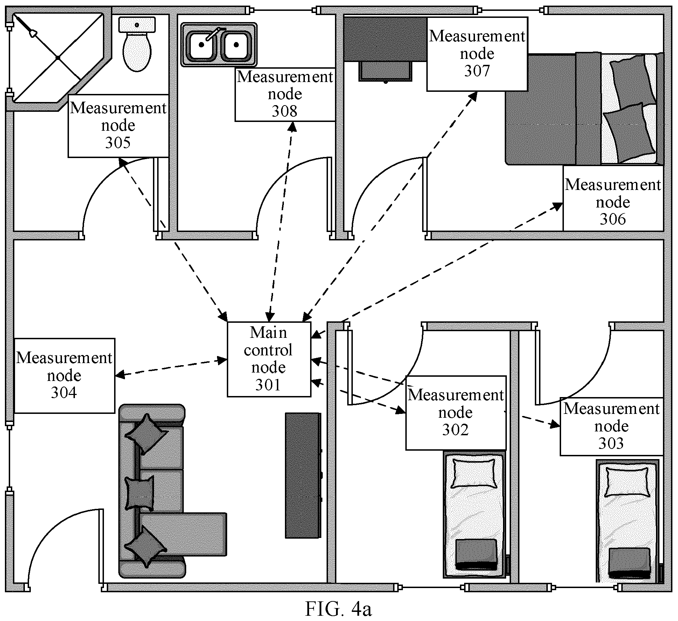

The home scenario may be shown in FIG. 4a. One main control node 301 and a plurality of measurement nodes, for example, a measurement node 302, a measurement node 303, a measurement node 304, a measurement node 305, a measurement node 306, a measurement node 307, and a measurement node 308 are deployed in a home environment shown in FIG. 4a. The main control node 301 may perform measurement interaction with the plurality of measurement nodes to monitor the entire home environment. For example, a link between the main control node 301 and the measurement node 305 may be configured to measure an action in a bathroom. If a sliding action is detected, the main control node 301 may send an alarm in time to notify a guardian, a medical personnel, and the like. For another example, links between the main control node 301 and the measurement node 302, the measurement node 303, and the measurement node 306 may be configured to measure a condition in a bedroom and, to monitor a sleep condition of a user.

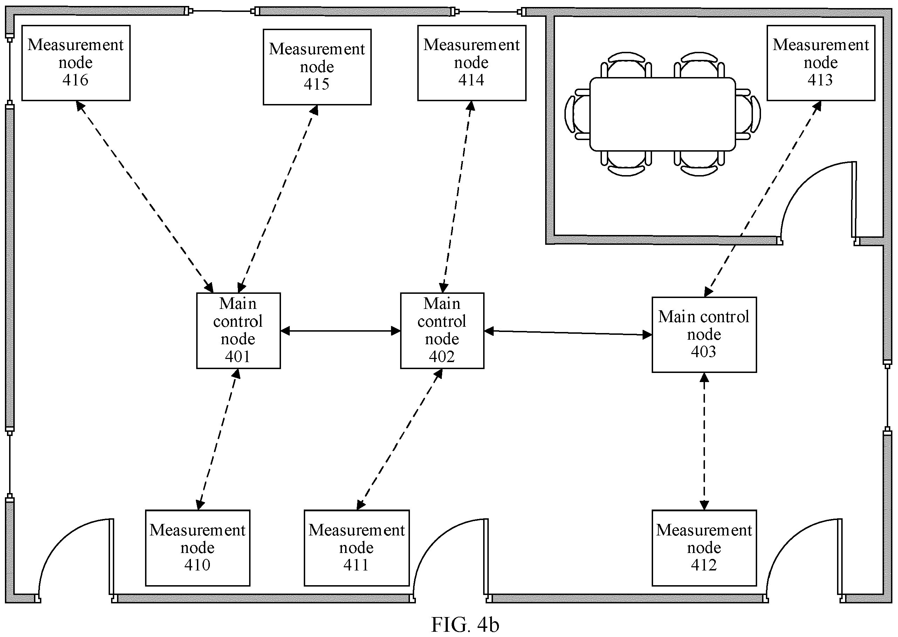

The office scenario may be applied to industrial and commercial environments. As shown in FIG. 4b, a to-be-monitored area in the office scenario is generally large, and a plurality of main control nodes may be used, for example, a main control node 401, a main control node 402, and a main control node 403. The main control node interacts with different measurement nodes to complete measurement on a specific area. For example, a link between the main control node 401 and a measurement node 410 may be configured to monitor entry and exit cases at a door. For another example, a link between the main control node 403 and a measurement node 413 may be configured to collect statistics on occupation of a conference room and a quantity of conference participants.

The communication system provided above is merely an example for description. It may be understood that a communication system using the solutions of this application is not limited thereto. This is uniformly described herein, and details are not described below again.

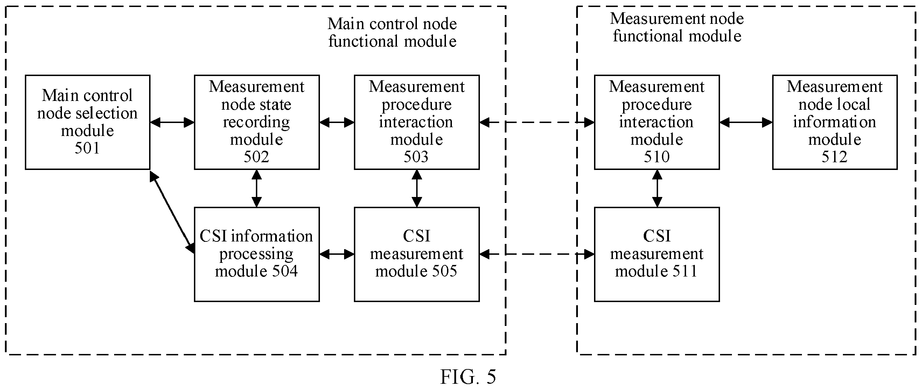

Optionally, the main control node and the measurement node may be implemented via functional modules in FIG. 5. FIG. 5 is a schematic diagram of a structure of a main control node functional module and a schematic diagram of a structure of a measurement node functional module according to an embodiment of this application.

The main control node functional module includes a main control node selection module 501, a measurement node state recording module 502, a measurement procedure interaction module 503, a CSI information processing module 504, and a CSI measurement module 505. The main control node selection module 501 may be responsible for selecting a main control node from a plurality of nodes capable of undertaking a main control node task, and may further be responsible for interaction between main control nodes. The measurement node state recording module 502 may be responsible for storing information about all measurement nodes subordinated to the main control node. Information about a measurement node includes but is not limited to at least one of the following information: a measurement node identifier (for example, a MAC address of the measurement node, an association identifier (association identifier, AID) of the measurement node, a sensing identifier (sensing identifier, SID) allocated to an unassociated measurement node), a sensing capability of the measurement node, a location of the measurement node, CSI measurement historical information of the measurement node, a threshold condition for triggering sensing of the measurement node, and the like. The measurement procedure interaction module 503 may be responsible for protocol processing of interaction between the main control node and the measurement node. The CSI information processing module 504 may be responsible for processing collected CSI information. The CSI measurement module 505 may be responsible for measuring a training symbol in a measurement group sent by the measurement node. After receiving the measurement group, the CSI measurement module 505 may output an uplink CSI measurement matrix of each subcarrier or subcarrier group. The CSI measurement module 505 may further be responsible for sending the uplink CSI measurement matrix to the CSI information processing module 504 for subsequent processing.

The measurement node functional module includes a measurement procedure interaction module 510, a CSI measurement module 511, and a measurement node local information module 512. The measurement procedure interaction module 510 may be responsible for responding to measurement interaction information of the main control node. The CSI measurement module 511 may be responsible for measuring a measurement group sent by the main control node and obtaining a downlink CSI measurement matrix. The measurement node local information module 512 may be responsible for storing measurement-related information. The measurement-related information includes but is not limited to at least one of the following information: a measurement session identifier, a CSI measurement history measured by the measurement node last time, a timestamp fed back by the measurement node last time, and the like.

The functional modules in the main control node and the measurement node in FIG. 5 may be implemented via a hardware chip, or may be implemented by refreshing firmware. Alternatively, some functional modules (for example, the main control node selection module 501 or the CSI information processing module 504) may be implemented via an operating system or driver software.

It may be understood that the structure shown in FIG. 5 does not constitute a specific limitation on the main control node and the measurement node. For example, in some other embodiments of this application, the main control node and the measurement node may include more or fewer parts than those shown in the figure, some components may be combined, some components may be split, or the components may be differently arranged. The parts shown in the figure may be implemented by hardware, software, or a combination of software and hardware. For example, the main control node includes a transceiver, a memory, and a processor. The transceiver may implement a function of the measurement procedure interaction module 503. The memory may implement a function of the measurement node state recording module 502. The processor may implement functions of the main control node selection module 501, the CSI information processing module 504, and the CSI measurement module 505. For another example, the main control node includes a transceiver, a memory, and a processor. The transceiver may implement a function of the measurement procedure interaction module 510. The memory may implement a function of the measurement node local information module 512. The processor may implement a function of the CSI measurement module 511.

With reference to FIG. 2 to FIG. 5, the following describes in detail a communication method provided in embodiments of this application by using an example in which a first communication apparatus interacts with a second communication apparatus. The first communication apparatus may be a receiver, and the second communication apparatus may be a transmitter. The transmitter may be an AP or a STA, and the receiver may be an AP or a STA.

It may be understood that, in embodiments of this application, the first communication apparatus and/or the second communication apparatus may perform some or all of steps in embodiments of this application. These steps or operations are merely examples. In embodiments of this application, other operations or variations of various operations may be further performed. In addition, the steps may be performed in a sequence different from a sequence presented in embodiments of this application, and not all the steps in embodiments of this application need to be performed.

It should be noted that names of messages between devices, names of parameters in the messages, or the like in the following embodiments of this application are merely examples, and there may be other names during specific implementation. This is not specifically limited in embodiments of this application.

In the communication method provided in embodiments of this application, the first communication apparatus may provide a feedback when determining that a variation of a channel state does not meet a threshold condition, and the second communication apparatus may determine that the variation of the channel state does not meet the threshold condition. In addition, the first communication apparatus may further provide a feedback when the variation of the channel state meets the threshold condition, and the second communication apparatus may determine that the variation of the channel state meets the threshold condition. In addition, when receiving no feedback, the second communication apparatus may also determine that the second communication apparatus receives no information fed back by the first communication apparatus. Therefore, accuracy of identifying the feedback by the second communication apparatus can be improved, robustness of a communication system can be improved, and accuracy of a sensing result can be further improved.

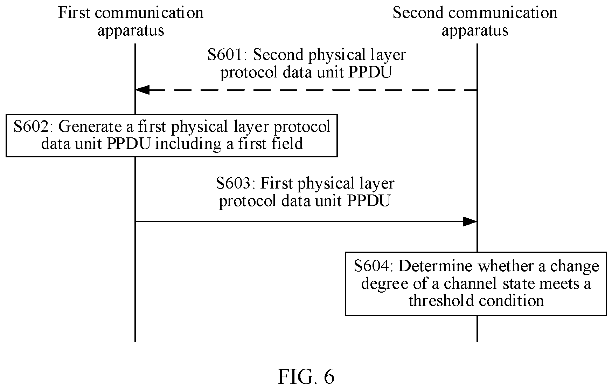

FIG. 6 is a possible communication process according to an embodiment of this application. The communication process includes the following steps:

Optionally, S601: A second communication apparatus sends a second physical layer protocol data unit (physical layer protocol data unit, PPDU), and a first communication apparatus receives the second PPDU.

The second PPDU is used to trigger the first communication apparatus to provide a feedback. The second PPDU may be similar to a feedback request frame, a feedback trigger frame, a poll (Poll) frame, or the like.

Optionally, the second PPDU may indicate to provide a feedback when a variation of a channel state does not meet a threshold condition. When the variation of the channel state does not meet the threshold condition, it may be considered that the variation of the channel state is small. The variation of the channel state not meeting the threshold condition may also be expressed in another manner. For example, the variation of the channel state does not exceed a threshold, or similarity of the channel state is greater than a threshold. This is not limited herein.

For example, the second PPDU indicates to feed back negative acknowledgment information when the variation of the channel state does not meet the threshold condition. Optionally, the negative acknowledgment information may be non-acknowledgment (non-ACK, NACK) information, or the negative acknowledgment information may be not met (Not met) information. For another example, the second PPDU indicates to feed back a PPDU when the variation of the channel state does not meet the threshold condition. The fed-back PPDU includes first information and second information. The first information indicates that the variation of the channel state does not meet the threshold condition. The second information is information related to the channel state.

The information related to the channel state may include one or more of the following information: a channel measurement result, complete CSI information, compressed CSI information, an NDP, or the like.

Alternatively, the second PPDU may indicate to provide a feedback when the variation of the channel state meets the threshold condition. When the variation of the channel state meets the threshold condition, it may be considered that the variation of the channel state is large. The variation of the channel state meeting the threshold condition may also be expressed in another manner. For example, the variation of the channel state exceeds a threshold, or similarity of the channel state is greater than a threshold. This is not limited herein.

For example, the second PPDU indicates to feed back acknowledgment information when the variation of the channel state meets the threshold condition. Optionally, the acknowledgment information may be acknowledgment (NACK) information, or the acknowledgment information may be met (Met) information. For another example, the second PPDU indicates to feed back a PPDU when the variation of the channel state meets the threshold condition. The feedback PPDU includes first information and second information. The first information indicates that the variation of the channel state meets the threshold condition. The second information is information related to the channel state.

S602: The first communication apparatus generates a first physical layer protocol data unit (physical layer protocol data unit, PPDU).

The first communication apparatus may send a feedback response (feedback response) based on a result of determining whether the variation of the channel state meets the threshold condition. The feedback response may be represented in a form of a PPDU (for example, the first PPDU), or the feedback response may be represented in a form of being included in a PPDU (for example, a MAC frame in the first PPDU, or information included in a MAC frame in the first PPDU).

The first PPDU includes a first field. The first field may indicate that the variation of the channel state does not meet the threshold condition. The first field may alternatively indicate that the variation of the channel state meets the threshold condition.

The first field may be equivalent to information indicated by n bits (bits), where n is a positive integer, and n=1, 2, 3, .... Herein, an example in which the first field is equivalent to information indicated by one bit is used. For example, when a value of the one bit is 1, it may indicate that the variation of the channel state meets the threshold condition. When the value of the one bit is 0, it may indicate that the variation of the channel state does not meet the threshold condition. Alternatively, on the contrary, when a value of the one bit is 1, it may indicate that the variation of the channel state does not meet the threshold condition. When the value of the one bit is 0, it may indicate that the variation of the channel state does not meet the threshold condition.

Optionally, the first field may indicate, in an implicit manner, whether the variation of the channel state meets the threshold condition.

In a possible manner, different numbers of first long training field symbols are set to indicate whether the variation of the channel state meets the threshold condition. For example, the first field indicates a number of first long training field symbols. The number of first long training field symbols may indicate that the variation of the channel state does not meet the threshold condition. The number of first long training field symbols may alternatively indicate that the variation of the channel state meets the threshold condition. For example, when the variation of the channel state is small, the first communication apparatus may include, in the first PPDU, a number of first long training field symbols indicating that the variation of the channel state does not meet the threshold condition. The second communication apparatus may determine, based on a received feedback, that the variation of the channel state is small. For another example, when the variation of the channel state is large, the first communication apparatus may include, in the first PPDU, a number of first long training field symbols indicating that the variation of the channel state meets the threshold condition. The second communication apparatus may determine, based on a received feedback, that the variation of the channel state is large.

The number of first long training field symbols is variable, that is, the number of first long training field symbols may be changed. In other words, the number of first long training field symbols is not fixed. For example, a first long training field may be represented as an xx-long training field (long training field, LTF). The xx-LTF may be a name in various generations of WLAN standards, for example, a high throughput (high throughput, HT)-LTF, a very high throughput (very high throughput, VHT)-LTF, a high efficiency (high efficiency, HE)-LTF, an extremely high throughput (extremely high throughput, EHT)-LTF, and the like. Optionally, for example, in an 802.11be standard, the first long training field may be an EHT-LTF. In an 802.11ax standard, the first long training field may be an HE-LTF. In an 802.11n standard, the first long training field may be an HT-LTF. In an 802.11ac standard, the first long training field may be a VHT-LTF. It should be noted that a number of legacy-long training field (legacy-LTF, L-LTF) symbols is fixed and cannot be changed. Therefore, the first long training field in this embodiment of this application is not an L-LTF.

The first field may include but is not limited to the following fields: a number of space-time streams (number of space-time streams, NSTS) field, a number of EHT-LTF symbols (Number of EHT-LTF Symbols) field, a modulation and coding scheme (modulation and coding scheme, MCS) field, an NSTS and midamble periodicity (NSTS And Midamble Periodicity) field, or the like. This is not limited herein. Optionally, for example, in the 802.11be standard, the first field may be a number of EHT-LTF symbols field. In the 802.11ax standard, the first field may be an NSTS and midamble periodicity field. In the 802.11ac standard, the first field may be an NSTS field. In the 802.11n standard, the first field may include an MCS field, or the first field includes an MCS field and a space-time block code (space-time block code, STBC) field, or the first field includes an MCS field, an STBC field, and a number of extension spatial streams (Number of Extension Spatial Streams, NESS) field. In other words, the number of first long training field symbols may be determined by a value of the MCS field, or may be determined by a value of the MCS field and a value of the STBC field, or may be determined by a value of the MCS field, a value of the STBC field, and a value of the NESS field.

An example in which the number of first long training field symbols is determined by the value of the MCS field, the value of the STBC field, and the value of the NESS field is used for description. The value of the MCS field and the value of the STBC field correspond to a value of the NSTS. The value of the NESS field corresponds to a value of a number of high throughput extension long training fields (Number of HT-Extension Long Training fields, NHT-ELTF) field. The value of the NSTS corresponds to a number of high throughput data long training fields (Number of HT-Data Long Training fields, NHT-DLTF). The number of first long training field symbols may be determined by summing up the value of the NHT-ELTF field and the value of the NHT-DLTF field.

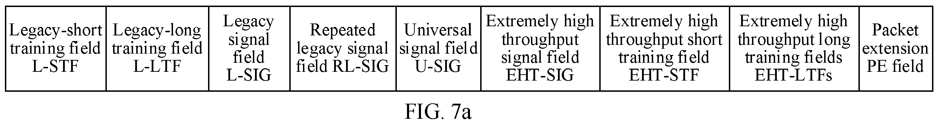

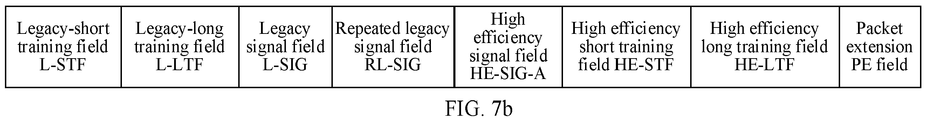

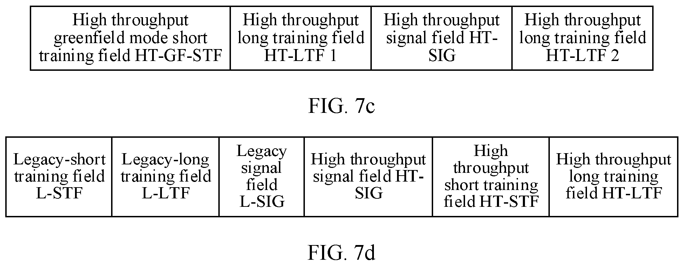

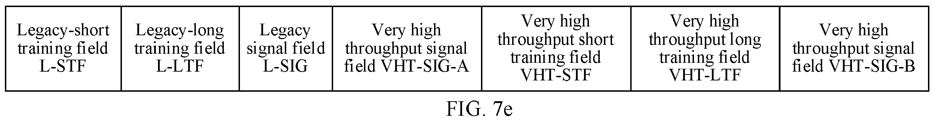

The first PPDU may further include one or more first long training fields. Optionally, a format of the first PPDU complies with a WLAN standard. In various generations of the WLAN standards, a PPDU may have different formats. For example, in the 802.11be standard, a possible format of the PPDU is shown in FIG. 7a. The PPDU includes a legacy-short training field (legacy-short training field, L-STF), an L-LTF, a legacy signal field (legacy signal field, L-SIG), a repeated legacy signal field (repeated legacy signal field, RL-SIG), a universal signal field (universal signal field, U-SIG), an EHT-SIG, an EHT-STF, EHT-LTFs and a packet extension (packet extension, PE) field. The EHT-SIG includes a number of EHT-LTF symbols field, and the number of EHT-LTF symbols field includes the number of first long training field symbols. For another example, in the 802.11ax standard, a possible format of the PPDU is shown in FIG. 7b. The PPDU includes an L-STF, an L-LTF, an L-SIG, an RL-SIG, an HE-SIG-A, an HE-STF, an HE-LTF, and a PE. The HE-SIG-A includes an NSTS and midamble periodicity field, and the NSTS and midamble periodicity field includes the number of first long training field symbols. For another example, in the 802.11n standard, a possible format of the PPDU is shown in FIG. 7c. The PPDU includes an HT greenfield mode (greenfield, GT) STF, an HT-LTF1, an HT-SIG, and an HT-LTF2. The HT-SIG includes an MCS field, and the MCS field includes the number of first long training field symbols. In the 802.11n standard, another possible format of the PPDU is shown in FIG. 7d. The PPDU includes an L-STF, an L-LTF, an L-SIG, an HT-SIG, an HT-STF, and an HT-LTF. For another example, in the 802.11ac standard, a possible format of the PPDU is shown in FIG. 7e. The PPDU includes an L-STF, an L-LTF, an L-SIG, a VHT-SIG-A, a VHT-STF, a VHT-LTF, and a VHT-SIG-B. The VHT-SIG-A includes an NSTS field, and the NSTS field includes the number of first long training field symbols. It should be noted that a length of each field in FIG. 7a, FIG. 7b, FIG. 7c, FIG. 7e, and FIG. 7d is merely an example, and constitutes no limitation on a number of symbols or a number of bits occupied by each field.

For example, whether the variation of the channel state meets the threshold condition may be distinguished by using the number of first long training field symbols and an NSTS or a number of spatial streams (number of spatial steams, NSS).

For example, that the number of first long training field symbols indicates that the variation of the channel state does not meet the threshold condition includes one of the following: The number of first long training field symbols is greater than or equal to the NSTS; the number of first long training field symbols is less than or equal to the NSTS; the number of first long training field symbols is greater than or equal to the NSS; or the number of first long training field symbols is less than or equal to the NSS.

That the number of first long training field symbols indicates that the variation of the channel state meets the threshold condition includes one of the following: The number of first long training field symbols is less than or equal to the NSTS; the number of first long training field symbols is greater than or equal to the NSTS; the number of first long training field symbols is less than or equal to the NSS; or the number of first long training field symbols is greater than or equal to the NSS.

For another example, whether the variation of the channel state meets the threshold condition may be distinguished by using a range of the number of first long training field symbols.

For example, that the number of first long training field symbols indicates that the variation of the channel state does not meet the threshold condition includes that the number of first long training field symbols is included in a first set.

That the number of first long training field symbols indicates that the variation of the channel state meets the threshold condition includes that the number of first long training field symbols is included in a sixth set.

The first set is different from the sixth set. Optionally, the first set may be related to the NSTS or the NSS. For example, the first set is a set greater than (or equal to) the NSTS, or the first set is a set less than (or equal to) the NSTS. For another example, the first set is a set greater than (or equal to) the NSS, or the first set is a set less than (or equal to) the NSS. Optionally, the sixth set may be related to the NSTS or the NSS. For example, the sixth set is a set less than (or equal to) the NSTS, or the sixth set is a set greater than (or equal to) the NSTS. For another example, the sixth set is a set less than (or equal to) the NSS, or the sixth set is a set greater than (or equal to) the NSS. For example, the first set includes 1, and the sixth set is a set of integers greater than 1. When the number of first long training field symbols is 1, it indicates that the variation of the channel state does not meet the threshold condition. When the number of first long training field symbols is not 1 (for example, 2), it indicates that the variation of the channel state meets the threshold condition.

For another example, whether the variation of the channel state meets the threshold condition may be distinguished by using a range of the number of first long training field symbols and a range of the NSTS or the NSS.

For example, that the number of first long training field symbols indicates that the variation of the channel state does not meet the threshold condition includes one of the following: The number of first long training field symbols is included in a second set, and the NSTS is included in a third set; or the number of first long training field symbols is included in a fourth set, and the NSS is included in a fifth set.

That the number of first long training field symbols indicates that the variation of the channel state meets the threshold condition includes one of the following: The number of first long training field symbols is included in a seventh set, and the NSTS is included in an eighth set; or the number of first long training field symbols is included in a ninth set, and the NSS is included in a tenth set.

The second set and the third set may be completely the same, or partially the same, or completely different. The fourth set and the fifth set may be completely the same, or partially the same, or completely different. The seventh set and the eighth set may be completely the same, or partially the same, or completely different. The ninth set and the tenth set may be completely the same, or partially the same, or completely different.

It may be understood that the number of first long training field symbols indicating that the variation of the channel state meets the threshold condition the number of first long training field symbols indicating that the variation of the channel state does not meet the threshold condition are different, and respectively meet the foregoing respective conditions.

In another possible manner, a length of a first padding field is set to indicate whether the variation of the channel state meets the threshold condition. For example, the first field indicates the length of the first padding (Padding) field. The length of the first padding field may indicate that the variation of the channel state does not meet the threshold condition. The length of the first padding field may alternatively indicate that the variation of the channel state meets the threshold condition.

The length of the first padding field is variable. In other words, the length of the first padding field is not fixed.

For example, that the length of the first padding field indicates that the variation of the channel state does not meet the threshold condition includes one of the following: The length of the first padding field is greater than or equal to a first length; or the length of the first padding field is less than or equal to the first length. The first length is related to a time length or a number of symbols. The time length and the number of symbols are not limited herein. For example, a time length representing the first length may be 4 microseconds ($\mu$s).

That the length of the first padding field indicates that the variation of the channel state meets the threshold condition includes one of the following: The length of the first padding field is less than or equal to the first length; or the length of the first padding field is greater than or equal to the first length.

It may be understood that a length of the first padding field indicating that the variation of the channel state meets the threshold condition a length of the first padding field indicating that the variation of the channel state does not meet the threshold condition are different, and respectively meet the foregoing respective conditions.

The first PPDU may further include the first padding field. Optionally, the first PPDU includes an SIG field, and the SIG field includes the first padding field. Alternatively, the first PPDU includes a PE field, and the PE field includes the first padding field. Alternatively, the first PPDU includes a MAC frame, and the MAC frame includes the first padding field.

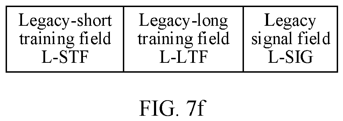

Optionally, if the length of the first padding field indicates whether the variation of the channel state meets the threshold condition, the first PPDU may be in the PPDU format shown in FIG. 7a, FIG. 7b, FIG. 7c, FIG. 7d, or FIG. 7e, or the first PPDU may be in the PPDU format shown in FIG. 7f. The PPDU format shown in FIG. 7f is a non-HT PPDU. A length of an L-LTF carried in the non-HT PPDU is fixed.

In still another possible manner, information carried on a subcarrier of a second long training field is set to indicate whether the variation of the channel state meets the threshold condition. The first field may be the second long training field. The information carried on the subcarrier of the second long training field may indicate that the variation of the channel state does not meet the threshold condition. The information carried on the subcarrier of the second long training field may alternatively indicate that the variation of the channel state meets the threshold condition.

Optionally, the second PPDU in S601 is a trigger frame (Trigger frame) similar to an NDP feedback report poll (NDP feedback report poll, NFRP). In other words, the second communication apparatus may trigger, by using the trigger frame similar to the NFRP, the first communication apparatus to provide the feedback. The first communication apparatus may include information in a subcarrier allocated to the first communication apparatus, to indicate whether the variation of the channel state meets the threshold condition.

For example, the trigger frame of the NFRP may be shown in Table 1. When a value (Value) of a field in the trigger frame of the NFRP is 0, it represents that a resource is requested, to be specific, whether the first communication apparatus is asked whether there is a resource (or data, or information) to be reported. When a value of the field in the trigger frame of the NFRP is not 0 (for example, 1), it indicates to trigger to feed back whether the variation of the channel state meets the threshold condition.

**Table 1**

| Value | Description (Description) |
|-------|--------------------------|
| 0 | Resource request |
| 1 to 15 | Reserved |

Optionally, if the information carried on the subcarrier of the second long training field indicates whether the variation of the channel state meets the threshold condition, the first PPDU may be in the PPDU format shown in FIG. 7a, FIG. 7b, FIG. 7c, FIG. 7d, or FIG. 7e, or the first PPDU may be in the PPDU format shown in FIG. 7f.

In yet another possible manner, a size (SIZE) of a third long training field is set to indicate whether the variation of the channel state meets the threshold condition. The first field may indicate the size of the third long training field. The size of the third long training field may be a number of subcarriers of the third long training field. The size of the third long training field may be in a format such as 1x, 2x, 4x, or the like. The size of the third long training field may indicate that the variation of the channel state does not meet the threshold condition. The size of the third long training field may alternatively indicate that the variation of the channel state meets the threshold condition.

For example, that the size of the third long training field indicates that the variation of the channel state does not meet the threshold condition includes one of the following: The size of the third long training field is in a 1x format; the size of the third long training field is in a 2x format; or the size of the third long training field is in a 4x format.

That the size of the third long training field indicates that the variation of the channel state meets the threshold condition includes one of the following: The size of the third long training field is in a 1x format; the size of the third long training field is in a 2x format; or the size of the third long training field is in a 4x format.

It may be understood that a size of the third long training field indicating that the variation of the channel state meets the threshold condition and a size of the third long training field indicating that the variation of the channel state does not meet the threshold condition are different, and respectively meet the foregoing respective conditions.

Optionally, if the size of the third long training field indicates whether the variation of the channel state meets the threshold condition, the first PPDU may be in the PPDU format shown in FIG. 7a, FIG. 7b, FIG. 7c, FIG. 7d, or FIG. 7e, or the first PPDU may be in the PPDU format shown in FIG. 7f.

In a sensing process, whether the variation of the channel state meets the threshold condition may be indicated in an implicit manner.

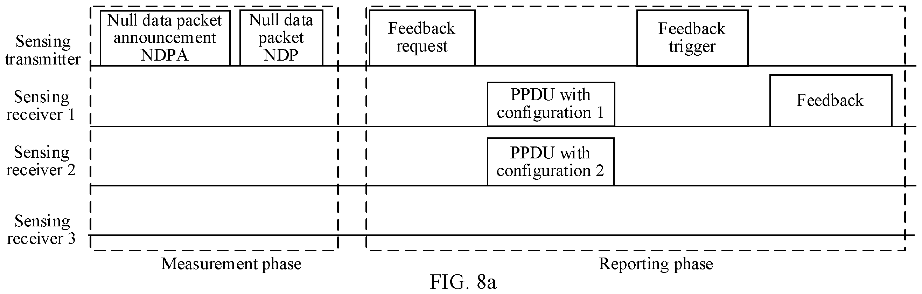

FIG. 8a is a possible sensing process according to an embodiment of this application. In a measurement phase, a sensing transmitter sends an NDPA and an NDP to indicate one or more sensing receivers to measure CSI. In a reporting phase, the sensing transmitter sends a feedback request. A sensing receiver 1 sends a PPDU. The PPDU carries configuration (Configuration) 1, and the configuration 1 indicates that the variation of the channel state meets the threshold condition. A sensing receiver 2 sends a PPDU. The PPDU carries configuration 2, and the configuration 2 indicates that the variation of the channel state does not meet the threshold condition. The configuration 1 and the configuration 2 may be the foregoing implicit indication manners. The sensing transmitter sends a feedback trigger to the sensing receiver 1, and the sensing receiver 1 sends a feedback. The feedback includes the information related to the channel state, for example, the channel measurement result, the complete CSI information, the compressed CSI information, the NDP, or the like.

In some scenarios, in the sensing process, when the information carried on the subcarrier of the second long training field is set to indicate whether the variation of the channel state meets the threshold condition, a type of the feedback request may be an NFRP trigger frame. In other words, the sensing transmitter may trigger, by using the NFRP trigger frame, the one or more sensing receivers to send an NDP feedback report response (NDP feedback report response). The sensing receiver receives the NFRP trigger frame, determines that the sensing receiver is scheduled, and then includes information in a corresponding subcarrier of a second long training field in the NDP feedback report response. The first PPDU may be the NDP feedback report response. In this way, more efficient feedback can be implemented, and overheads can be reduced.

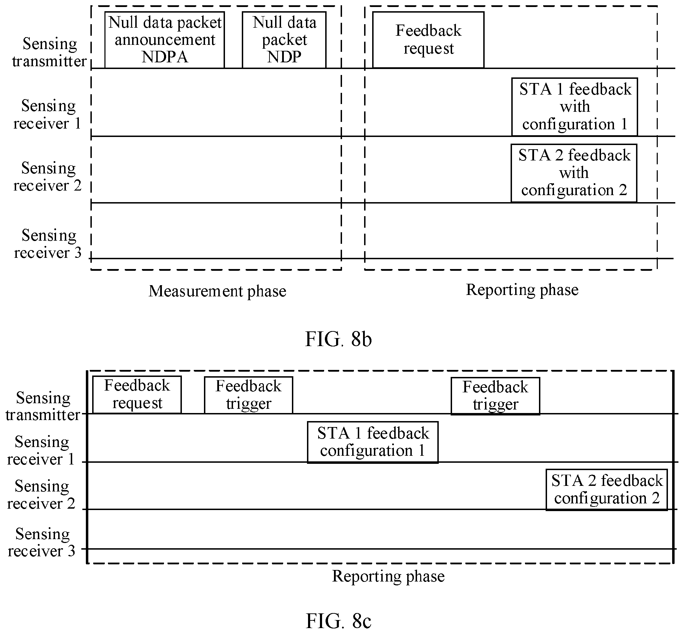

FIG. 8b is another possible sensing process according to an embodiment of this application. In a measurement phase, a sensing transmitter sends an NDPA and an NDP to indicate one or more sensing receivers to measure CSI. In a reporting phase, the sensing transmitter sends a feedback request. A sensing receiver 1 sends a feedback. The feedback carries configuration 1, and the configuration 1 indicates that the variation of the channel state meets the threshold condition. A sensing receiver 2 sends a feedback. The feedback carries configuration 2, and the configuration 2 indicates that the variation of the channel state does not meet the threshold condition.

FIG. 8a and FIG. 8b show a case in which a plurality of sensing receivers provide feedbacks simultaneously. For the simultaneous feedback, there may be a plurality of feedback manners. For example, a spatial stream is used for distinguishing, or orthogonal frequency division multiple access (orthogonal frequency division multiple access, OFDMA) is used for distinguishing.

FIG. 8c is still another possible sensing process according to an embodiment of this application. In the sensing process, a plurality of sensing receivers may also provide feedbacks in a polling manner. In a reporting phase, a sensing transmitter sends a feedback request. Then, the sensing transmitter sends a feedback trigger to a sensing receiver 1, and the sensing receiver 1 sends a feedback. The feedback carries configuration 1, and the configuration 1 indicates that the variation of the channel state meets the threshold condition. The sensing transmitter sends a feedback trigger to a sensing receiver 2, and the sensing receiver 2 sends a feedback. The feedback carries configuration 2, and the configuration 2 indicates that the variation of the channel state does not meet the threshold condition. It can be learned that, for the feedback in the polling manner, the sensing transmitter sends the feedback trigger to the sensing receiver to sequentially trigger the feedback.

Alternatively, the first field may indicate, in an explicit manner, whether the variation of the channel state meets the threshold condition.

The first PPDU may include the negative acknowledgment information. The negative acknowledgment information indicates that the variation of the channel state does not meet the threshold condition. Optionally, the negative acknowledgment information may be the NACK information, or the negative acknowledgment information may be the not met information.

The first PPDU may alternatively include the acknowledgment information. The acknowledgment information indicates that the variation of the channel state meets the threshold condition. Optionally, the acknowledgment information may be the ACK information, or the acknowledgment information may be the met information.

Optionally, the first PPDU includes a MAC frame. The MAC frame indicates that the variation of the channel state does not meet the threshold condition, or the variation of the channel state meets the threshold condition. Optionally, the MAC frame may further include but is not limited to at least one of the following information: received signal strength, a signal-to-noise ratio, the variation of the channel state, or the like.

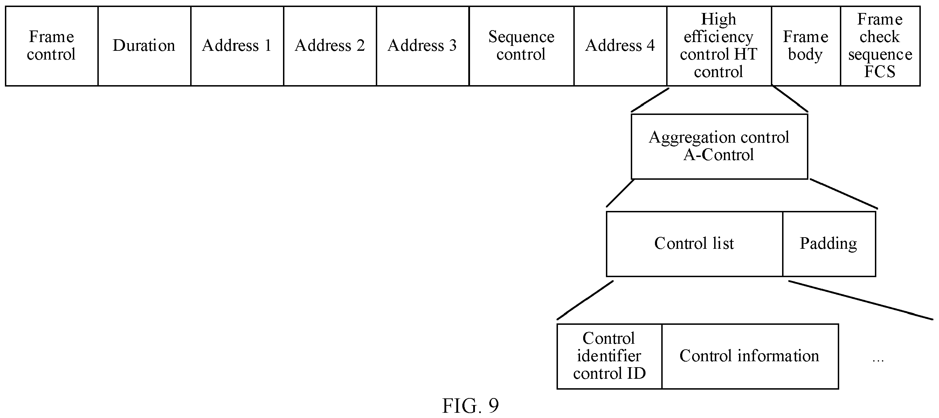

A specific form of the first PPDU may include a plurality of types. For example, a new aggregation control subfield (aggregation, A-Control subfield) may be defined to carry information about whether the variation of the channel state meets the threshold condition. For example, a command and status (command and status, CAS) control subfield, a new control ID, or the like may indicate the information about whether the variation of the channel state meets the threshold condition. A possible data (data) field in a PPDU format is shown in FIG. 9, including frame control (Frame Control), duration (Duration), an address (Address) 1, an address 2, an address 3, sequence control (Sequence Control), an address 4, high throughput control (HT Control), a frame body (Frame Body), and a frame check sequence (frame check sequence, FCS). The HT control subfield defines a new A-Control subfield. The A-Control subfield includes a control list (Control List) subfield and a padding subfield. The control list subfield includes a control identifier (Control ID) subfield, a control information (Control Information) subfield, and the like.

Optionally, if whether the variation of the channel state meets the threshold condition is indicated in the explicit manner, the first PPDU may be the PPDU format shown in FIG. 7a, FIG. 7b, FIG. 7c, FIG. 7d, or FIG. 7e, or the first PPDU may be the PPDU format shown in FIG. 7f.

In the sensing process, whether the variation of the channel state meets the threshold condition may be indicated in the explicit manner.

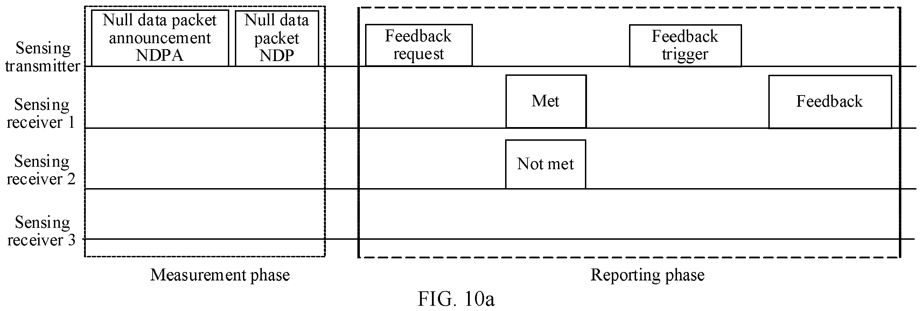

FIG. 10a is a possible sensing process according to an embodiment of this application. In a measurement phase, in a measurement phase, a sensing transmitter sends an NDPA and an NDP to indicate one or more sensing receivers to measure CSI. In a reporting phase, the sensing transmitter sends a feedback request. A sensing receiver 1 sends met information to indicate that the variation of the channel state meets the threshold condition. A sensing receiver 2 sends not met information to indicate that the variation of the channel state does not meet the threshold condition. The sensing transmitter sends a feedback trigger to the sensing receiver 1, and the sensing receiver 1 sends a feedback. The feedback includes the information related to the channel state.

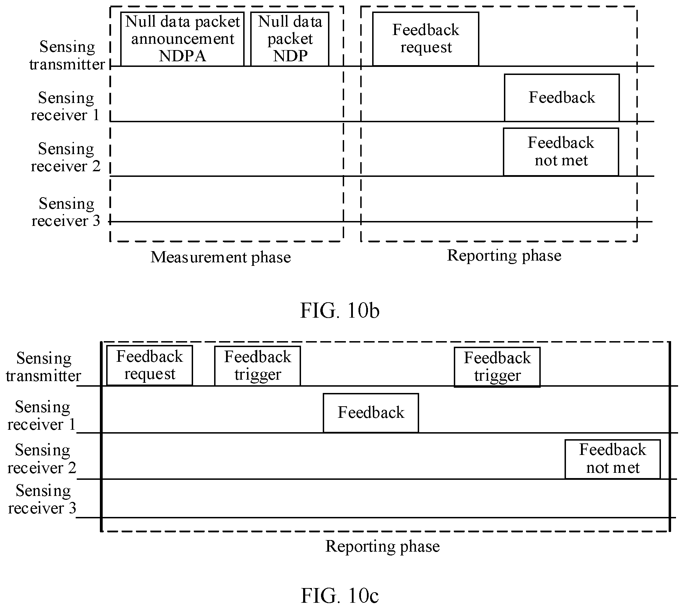

FIG. 10b is another possible sensing process according to an embodiment of this application. In a measurement phase, a sensing transmitter sends an NDPA and an NDP to indicate one or more sensing receivers to measure CSI. In a reporting phase, the sensing transmitter sends a feedback request. A sensing receiver 1 sends a feedback. The feedback indicates that the variation of the channel state meets the threshold condition. A sensing receiver 2 sends feedback not met. The feedback not met indicates that the variation of the channel state does not meet the threshold condition.

FIG. 10a and FIG. 10b show a case in which a plurality of sensing receivers provide feedbacks simultaneously. For the simultaneous feedback, there may be a plurality of feedback manners. For example, a spatial stream is used for distinguishing, or OFDMA is used for distinguishing.

FIG. 10c is still another possible sensing process according to an embodiment of this application. In the sensing process, a plurality of sensing receivers may also provide feedbacks in a polling manner. In a reporting phase, a sensing transmitter sends a feedback request. Then, the sensing transmitter sends a feedback trigger to a sensing receiver 1, and the sensing receiver 1 sends a feedback. The feedback indicates that the variation of the channel state meets the threshold condition. The sensing transmitter sends a feedback trigger to a sensing receiver 2, and the sensing receiver 2 sends feedback not met. The feedback not met indicates that the variation of the channel state does not meet the threshold condition.

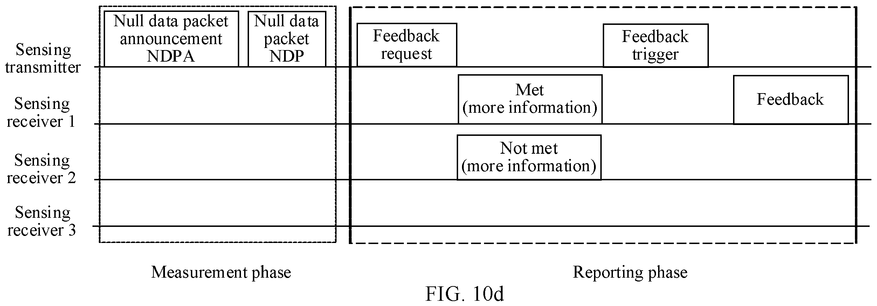

When the sensing receiver feeds back whether the variation of the channel state meets the threshold condition, more information may be fed back simultaneously, for example, at least one of the received signal strength, the signal-to-noise ratio, or the variation of the channel state. As shown in FIG. 10d, on the basis of 10a, the met information sent by the sensing receiver 1 carries more information, and the not met information sent by the sensing receiver 2 carries more information.

S603: The first communication apparatus sends the first PPDU, and the second communication apparatus receives the first PPDU.

When sending a first PPDU feedback, the first communication apparatus may provide the feedback simultaneously with another communication apparatus (namely, another receiver), or may provide the feedback in the polling manner.

S604: The second communication apparatus determines, based on the first PPDU, whether the variation of the channel state meets the threshold condition.

In this embodiment of this application, whether the variation of the channel state meets the threshold condition is indicated in the implicit or explicit manner. The second communication apparatus may determine, based on the received feedback, that the variation of the channel state meets or does not meet the threshold condition. In addition, when receiving no feedback, the second communication apparatus may also determine that the second communication apparatus receives no information fed back by the first communication apparatus. Therefore, accuracy of identifying the feedback by the second communication apparatus can be improved, robustness of a communication system can be improved, and accuracy of a sensing result can be further improved.

In embodiments of this application, unless otherwise specified or a logical conflict occurs, terms and/or descriptions in different embodiments are consistent and may be referenced by each other, and technical features in different embodiments may be combined to form a new embodiment based on an internal logical relationship.

It may be understood that in the foregoing embodiments, the method and/or steps implemented by the first communication apparatus may be implemented by a part (for example, a chip or a circuit) that may be used in the first communication apparatus, and the method and/or steps implemented by the second communication apparatus may be implemented by a part that may be used in the second communication apparatus.

In the foregoing embodiments provided in this application, the method provided in embodiments of this application is separately described from a perspective of interaction between the first communication apparatus and the second communication apparatus. To implement the functions in the method provided in the foregoing embodiments of this application, the first communication apparatus and the second communication apparatus may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

The following describes, with reference to the accompanying drawings, a communication apparatus used to implement the foregoing method in embodiments of this application. Therefore, the foregoing content may be used in subsequent embodiments, and repeated content is not described again.

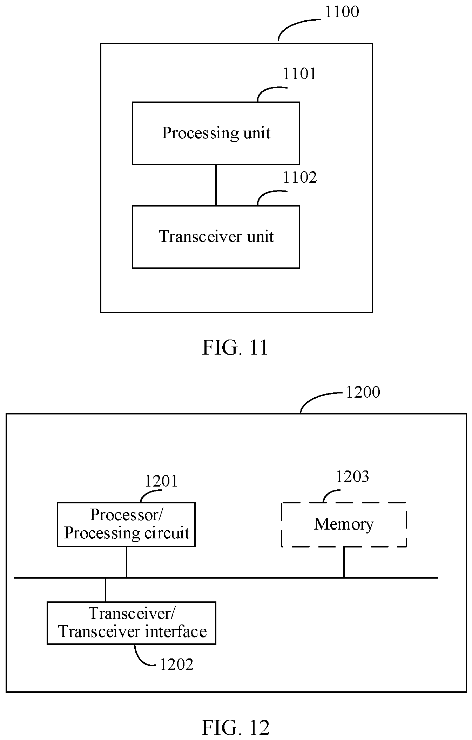

FIG. 11 is a possible representation form of a communication apparatus according to an embodiment of this application. The communication apparatus 1100 may be configured to implement functions or steps implemented by the first communication apparatus or the second communication apparatus in the foregoing method embodiments. The communication apparatus may include a processing module 1101 and a transceiver module 1102. Optionally, the apparatus may further include a storage unit. The storage unit may be configured to store instructions (code or a program) and/or data. The processing module 1101 and the transceiver module 1102 may be coupled to the storage unit. For example, the processing unit 1101 may read the instructions (the code or the program) and/or the data in the storage unit, to implement a corresponding method. The foregoing units may be disposed independently, or may be partially or completely integrated.

In some possible implementations, the communication apparatus 1100 can correspondingly implement behavior and functions of the first communication apparatus in the foregoing method embodiments. For example, the communication apparatus 1101 may be an AP, or may be a part (for example, a chip or a circuit) applied to an AP. The transceiver module 1102 may be configured to perform all receiving or sending operations performed by the first communication apparatus in the embodiment shown in FIG. 6, for example, S601 and S603 in the embodiment shown in FIG. 6, and/or another process used to support the technology described in this specification. The processing module 1101 is configured to perform all operations performed by the first communication apparatus in the embodiment shown in FIG. 6 except a receiving and sending operation, for example, S602 in the embodiment shown in FIG. 6, and/or another process used to support the technology described in this specification.

For example, the processing unit 1001 is configured to generate a first PPDU. The first PPDU includes a first field. The first field indicates that a variation of a channel state does not exceed a threshold, or indicates that a variation of a channel state exceeds a threshold. The transceiver module 1102 is configured to send the first PPDU. Alternatively, the transceiver module 1102 is configured to receive a second PPDU. The second PPDU indicates to provide a feedback when the variation of the channel state does not exceed the threshold, or indicates to provide a feedback when the variation of the channel state exceeds the threshold.

In some possible implementations, the communication apparatus 1100 can correspondingly implement behavior and functions of the second communication apparatus in the foregoing method embodiments. For example, the communication apparatus 1101 may be an AP, or may be a part (for example, a chip or a circuit) applied to an AP. The transceiver module 1102 may be configured to perform all receiving or sending operations performed by the second communication apparatus in the embodiment shown in FIG. 6, for example, S601 and S603 in the embodiment shown in FIG. 6, and/or another process used to support the technology described in this specification. The processing module 1101 is configured to perform all operations performed by the second communication apparatus in the embodiment shown in FIG. 6 except a receiving and sending operation, for example, S604 in the embodiment shown in FIG. 6, and/or another process used to support the technology described in this specification.

For example, the transceiver module 1102 is configured to receive the first PPDU. The processing unit 1101 is configured to determine that the variation of the channel state does not exceed the threshold, or determine that the variation of the channel state exceeds the threshold. Alternatively, the processing unit 1101 is configured to generate the second PPDU. The second PPDU indicates to provide a feedback when the variation of the channel state does not exceed the threshold, or indicates to provide a feedback when the variation of the channel state exceeds the threshold. The transceiver module 1102 is configured to send the second PPDU.

In a possible implementation of the communication apparatus 1100, that the first field indicates that a variation of a channel state does not exceed a threshold includes: The first field indicates a number of first long training field symbols, and the number of first long training field symbols indicates that the change of the channel state does not exceed the threshold; or the first field indicates a length of a first padding field, and the length of the first padding field indicates that the variation of the channel state does not exceed the threshold; or the first field is a second long training field, and information carried on a subcarrier of the second long training field indicates that the variation of the channel state does not exceed the threshold; or the first field indicates a size of a third long training field, and the size of the third long training field indicates that the variation of the channel state does not exceed the threshold.

In a possible implementation of the communication apparatus 1100, that the first field indicates that a variation of a channel state does not exceed a threshold includes: The first field includes negative acknowledgment information, and the negative acknowledgment information indicates that the variation of the channel state does not exceed the threshold.

In a possible implementation of the communication apparatus 1100, if meeting any one of the following cases, the number of first long training field symbols indicates that the variation of the channel state does not exceed the threshold, where the cases include: The number of first long training field symbols is less than a number of space-time streams NSTS; the number of first long training field symbols is less than a number of spatial streams NSS; the number of first long training field symbols is included in a first set; the number of first long training field symbols is included in a second set, and the NSTS is included in a third set; and the number of first long training field symbols is included in a fourth set, and the NSS is included in a fifth set.

In a possible implementation of the communication apparatus 1100, that the first field further indicates that a variation of a channel state exceeds a threshold includes: The first field indicates a number of first long training field symbols, and the number of first long training field symbols indicates that the variation of the channel state exceeds the threshold; or the first field indicates a length of a first padding field, and the length of the first padding field indicates that the variation of the channel state exceeds the threshold; or the first field is a second long training field, and information carried on a subcarrier of the second long training field indicates that the variation of the channel state exceeds the threshold; or the first field indicates a size of a third long training field, and the size of the third long training field indicates that the variation of the channel state exceeds the threshold.

In a possible implementation of the communication apparatus 1100, if meeting any one of the following cases, the number of first long training field symbols indicates that the variation of the channel state exceeds the threshold, where the cases include: The number of first long training field symbols is greater than an NSTS; the number of first long training field symbols is greater than an NSS; the number of first long training field symbols is included in a sixth set; the number of first long training field symbols is included in a seventh set, and the NSTS is included in an eighth set; and the number of first long training field symbols is included in a ninth set, and the NSS is included in a tenth set.

In a possible implementation of the communication apparatus 1100, that the first field indicates a number of first long training field symbols includes: The first field is an NSTS field, and the NSTS field indicates the number of first long training field symbols; or the first field is a number of EHT-LTF symbols field, and the number of EHT-LTF symbols field indicates the number of first long training field symbols; or the first field is an NSTS and midamble periodicity field, and the NSTS and midamble periodicity field indicates the number of first long training field symbols; or the first field includes an MCS field, and the MCS field indicates the number of first long training field symbols; or the first field includes an MCS field and an STBC field, and the MCS field and the STBC field indicate the number of first long training field symbols; or the first field includes an MCS field, an STBC field, and an NESS field, and the MCS field, the STBC field, and the NESS field indicate the number of first long training field symbols.

In a possible implementation of the communication apparatus 1100, the first PPDU is a null data packet NDP, or the first PPDU includes a media access control MAC frame.

In a possible implementation of the communication apparatus 1100, the first PPDU includes a MAC frame, and the MAC frame further includes the variation of the channel state.

It should be noted that in embodiments of this application, division into modules is an example, and is only a logical function division. During practical implementation, there may be another division manner. In addition, functional units in embodiments of this application may be integrated into one processing unit, or may exist alone physically, or two or more units are integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for enabling a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

It should be understood that a processing module 1201 in this embodiment of this application may be implemented by a processor/processing circuit or a circuit assembly related to a processor/processing circuit. A transceiver module 1202 may be implemented by a transceiver/transceiver interface, a circuit assembly related to a transceiver/a transceiver interface, or a communication interface.

FIG. 12 is a possible representation form of a communication apparatus according to an embodiment of this application. An apparatus 1200 may be configured to implement the method described in the foregoing method embodiments. The communication apparatus 1200 may be an AP or a STA, and can implement functions of the first communication apparatus or the second communication apparatus in the method provided in embodiments of this application. Alternatively, the communication apparatus 1200 may be an apparatus that can support the first communication apparatus in implementing a corresponding function in the method provided in embodiments of this application, or an apparatus that can support the second communication apparatus in implementing a corresponding function in the method provided in embodiments of this application. The communication apparatus 1200 may be a chip or a chip system. In this embodiment of this application, the chip system may include a chip, or may include a chip and another discrete component.

The communication apparatus 1200 includes one or more processors/processing circuits 1201 configured to implement or support the communication apparatus 1200 in implementing functions of the first communication apparatus or the second communication apparatus in the method provided in embodiments of this application, for example, generating the foregoing first PPDU. Optionally, the communication apparatus 1200 may further include at least one memory 1203 configured to store program instructions and/or data. The memory 1203 is coupled to the processor/processing circuit 1201. The coupling in this embodiment of this application may be an indirect coupling or a communication connection between apparatuses, units, or modules in an electrical form, a mechanical form, or another form, and is used for information exchange between the apparatuses, the units, or the modules. The processor/processing circuit 1201 and the memory 1203 may operate cooperatively. The processor/processing circuit 1201 may execute the program instructions and/or the data stored in the memory 1203, so that the communication apparatus 1200 implements a corresponding method. At least one of the at least one memory may be located in the processor/processing circuit.

The communication apparatus 1200 may further include the transceiver/transceiver interface 1202 configured to communicate with another device through a transmission medium, so that an apparatus in the communication apparatus 1200 may communicate with the another device. The processor/processing circuit 1201 may send and receive data by using the transceiver/transceiver interface 1202. The transceiver/transceiver interface 1202 may be specifically a transceiver/transceiver interface. The communication apparatus 1200 may further include a radio frequency unit. The radio frequency unit may be independent of the communication apparatus 1200, or may be integrated into the communication apparatus 1200. Certainly, the foregoing transceiver/transceiver interface 1202 may further include an antenna, for example, a remote antenna independent of the communication apparatus 1200, or may be an antenna integrated into the communication apparatus 1200.

In hardware implementation, the transceiver module 1002 may be a transceiver/transceiver interface 1202.

A specific connection medium among the transceiver/transceiver interface 1202, the processor/processing circuit 1201, and the memory 1203 is not limited in this embodiment of this application. In this embodiment of this application, the memory 1203, the processor/processing circuit 1201, and the transceiver/transceiver interface 1202 are connected by using a bus in FIG. 12. The bus is represented by a bold line in FIG. 12. A connection manner between other parts is merely an example for description, and is not limited thereto. The bus may be classified into an address bus, a data bus, a control bus, and the like. For ease of representation, only one bold line is used to represent the bus in FIG. 12, but this does not mean that there is only one bus or only one type of bus.

In this embodiment of this application, the processor/processing circuit 1201 may be a general-purpose processor/processing circuit, a digital signal processor/processing circuit, an application-specific integrated circuit, a field programmable gate array or another programmable logic device, a discrete gate or transistor logic device, or a discrete hardware assembly, and may implement or perform the methods, steps, and logical block diagrams disclosed in embodiments of this application. The general-purpose processor/processing circuit may be a microprocessor/processing circuit, any conventional processor/processing circuit, or the like. The steps of the methods disclosed with reference to embodiments of this application may be directly performed and completed by a hardware processor/processing circuit, or may be performed and completed by using a combination of hardware in the processor/processing circuit and a software module.

In this embodiment of this application, the memory 1203 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

It should be noted that the communication apparatus in the foregoing embodiments may be a terminal, or may be a circuit, or may be a chip applied to a terminal, or may be another combined component, part, or the like that has a function of the foregoing terminal. When the communication apparatus is a terminal, the transceiver module may be a transceiver/transceiver interface, and may include an antenna, a radio frequency circuit, and the like. The processing module may be a processor/processing circuit, for example, a central processing unit (central processing unit, CPU). When the communication apparatus is a part having the foregoing terminal functions, the transceiver module may be a radio frequency unit, and the processing module may be a processor/processing circuit. When the communication apparatus is a chip or a chip system, the transceiver module may be an input/output interface of the chip or the chip system, and the processing module may be a processor/processing circuit of the chip or the chip system.

In a possible product form, the AP and the STA in embodiments of this application may alternatively be implemented by using one or more FPGAs (field programmable gate arrays), PLDs (programmable logic devices), controllers, state machines, gate logics, discrete hardware parts, any other suitable circuits, or any combination of circuits that can perform various functions described in this application.

The first communication apparatus in embodiments of this application may be an AP, or may be a STA. The second communication apparatus may be an AP, or may be a STA. It should be understood that the APs in the foregoing product forms have any function of the AP in the foregoing method embodiments, and details are not described herein again. The STAs in the foregoing product forms have any function of the STA in the foregoing method embodiments, and details are not described herein again.

An embodiment of this application further provides a communication system. Specifically, the communication system includes a second communication apparatus and a first communication apparatus, or may further include more first communication apparatuses and second communication apparatuses. For example, the communication system includes a second communication apparatus and a first communication apparatus that are configured to implement related functions in FIG. 6.

The first communication apparatus is separately configured to implement functions of the related first communication apparatus part in FIG. 6. The second communication apparatus is configured to implement functions of the related second communication apparatus in FIG. 6. For example, the second communication apparatus may perform S601, S603, and S604 in the embodiment shown in FIG. 6, and the first communication apparatus may perform S601, S602, and S603 in the embodiment shown in FIG. 6.

An embodiment of this application further provides a computer-readable storage medium, including instructions. When the instructions are run on a computer, the computer is enabled to perform the method performed by the first communication apparatus or the second communication apparatus in FIG. 6.

An embodiment of this application further provides a computer program product, including computer program code. When the computer program code is run on a computer, the computer is enabled to perform the method performed by the first communication apparatus or the second communication apparatus in FIG. 6.

An embodiment of this application provides a chip system. The chip system includes a processor, and may further include a memory. The chip system is configured to implement functions of the first communication apparatus or the second communication apparatus in the foregoing method. The chip system may include a chip, or may include a chip and another discrete component.

An embodiment of this application further provides a communication apparatus, including a processor and an interface. The processor is configured to perform the communication method in the foregoing method embodiments.

It should be understood that the foregoing communication apparatus may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

An embodiment of this application further provides a processing apparatus, including a processor and an interface. The processor is configured to perform the method described in the foregoing method embodiments.

It should be understood that the foregoing processing apparatus may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedures, or functions based on embodiments of this application are all or partially generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, microwave, or the like) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid-state drive (Solid-State Drive, SSD)), or the like.

A person of ordinary skill in the art may be aware that the units and steps in the examples described with reference to embodiments disclosed herein may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, the unit division is merely logical function division and may be other division in actual implementation. For example, a plurality of units or assemblies may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software function unit.

With descriptions of the foregoing embodiments, a person skilled in the art may clearly understand that this application may be implemented by hardware, firmware, or a combination thereof. When the foregoing functions are implemented by using software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage, a magnetic disk storage medium or another magnetic storage device, or any other medium that can be used to carry or store expected program code in a form of an instruction or a data structure and can be accessed by a computer. In addition, any connection may be appropriately a computer-readable medium. For example, if software is transmitted from a website, a server, or another remote source by using a coaxial cable, an optical fiber/cable, a twisted pair, a digital subscriber line (DSL), or wireless technologies such as infrared ray, radio, and microwave, the coaxial cable, optical fiber/cable, twisted pair, DSL, or wireless technologies such as infrared ray, radio, and microwave are included in fixation of a medium to which they belong. For example, a disk (Disk) and a disc (disc) used in this application include a compact disc (CD), a laser disc, an optical disc, a digital versatile disc (DVD), a floppy disk, and a Blu-ray disc. The disk generally copies data by using a magnetic means, and the disc copies data optically by using a laser. The foregoing combination should also fall within the protection scope of the computer-readable medium.

This application further provides the following content:

## 1. How to calculate a variation of CSI?

In the present invention, the variation of the CSI is compared with a threshold. If a sensing receiver notifies that the variation of the CSI meets the threshold, met is fed back. Otherwise, not met is fed back. The sensing receiver that feeds back met subsequently may be triggered to further provide a feedback. The threshold may be set by a sensing transmitter (Sensing Transmitter) or a sensing initiator (Sensing Initiator), and is notified by the sensing transmitter or the sensing initiator to the sensing receiver. The sensing initiator may be represented as a station that initiates a sensing session, and the sensing transmitter may be represented as a station that sends, in a sensing period, a PPDU for sensing measurement.

Herein, how to calculate the variation of the CSI is further described. Previous calculation of the variation of the CSI only mentions that the variation of the CSI may be obtained by comparing currently measured CSI with a previous piece of CSI. In other words, input parameters are the currently measured CSI and the previously measured CSI. If the foregoing meaning is mathematically expressed, the meaning may be represented as $\Delta CSI = f(CSI_y, CSI_{ins})$. $\Delta CSI$ represents the variation of the CSI. $f(\cdot)$ represents a method or a calculation formula for calculating the variation of the CSI. $CSI_y$ is the previously measured CSI. $CSI_{ins}$ is CSI measured based on a current NDP (where ins means instantaneous).

Herein, the input parameters for calculating the variation of the CSI are further described as follows:

**A calculation manner 1 for the variation of the CSI:**
$\Delta CSI = f(CSI_y, CSI_{ins})$, where $CSI_{ins}$ is the CSI measured based on the current NDP, $CSI_y$ is the previously measured CSI, and $CSI_y$ may be CSI measured last time, average CSI, previously specified CSI, or the like.

**A calculation manner 2 for the variation of the CSI:**

$$\Delta CSI = a \cdot g\left(CSI_{y1}, CSI_{ins}\right) + (1 - a) \cdot h\left(CSI_{y2}, CSI_{ins}\right),$$

where

similarly, $CSI_{ins}$ is the CSI measured based on the current NDP;
$CSI_{y1}$ may be CSI measured last time, average CSI, or previously specified CSI;
$CSI_{y2}$ may be the CSI measured last time, the average CSI, or the previously specified CSI; and
a value range of *a* is included in [0, 1], and is intended for normalization, and another normalization method may alternatively be used.

For the foregoing variation of the CSI, in a design, $CSI_{y1}$ is the average CSI, and $CSI_{y2}$ is the CSI measured last time. In this case, for the variation of the CSI, a variation of the CSI obtained by comparing with the average CSI may be considered, and a variation obtained by comparing with the CSI measured last time may be considered, and a considered weight may be adjusted by using *a*.

It should be understood that the function f, the function g, and the function h in the foregoing two calculation manners may be the same or different.

The following describes the foregoing two calculation manners by using an example.

A normalized inner product of two vectors is used to represent a correlation. In other words, the variation of the CSI may be represented as:

$$\Delta CSI = 1 - \frac{|\mathbf{h}_1 \cdot \mathbf{h}_2^H|}{\|\mathbf{h}_1\|\|\mathbf{h}_2\|},$$

where

$\|\cdot\|$ is a Euclidean norm, and $h_1$ and $h_2$ are vectors formed by two CSI measurement results.

The calculation manner 1 is used as an example:

$$\Delta CSI = 1 - \frac{|\mathbf{h}_y \cdot \mathbf{h}_{ins}^H|}{\|\mathbf{h}_y\|\|\mathbf{h}_{ins}\|},$$

where

$h_y$ may represent a last CSI measurement result, an average CSI measurement result, or a marked measurement result.

The calculation manner 2 is used as an example:

$$\Delta CSI = a \cdot \left(1 - \frac{|\mathbf{h}_{avg} \cdot \mathbf{h}_{ins}^H|}{\|\mathbf{h}_{avg}\|\|\mathbf{h}_{ins}\|}\right) + (1-a) \cdot \left(1 - \frac{|\mathbf{h}_{pre} \cdot \mathbf{h}_{ins}^H|}{\|\mathbf{h}_{pre}\|\|\mathbf{h}_{ins}\|}\right),$$

where

an example in which $CSI_{y1}$ represents an average CSI measurement result ($\mathbf{h}_{avg}$, where avg herein means average) and $CSI_{y2}$ represents a last CSI measurement result ($\mathbf{h}_{pre}$, where pre herein means last) is provided herein.

## 2. How to calculate CSI in a multi-antenna scenario?

For CSI measurement of a single antenna, two CSI measurement results may be represented by using two vectors. Therefore, during calculation, a variation of CSI may be calculated by using an evaluation method between the two vectors (for example, a method for calculating a correlation of a product between normalized vectors). However, when CSI is in a matrix form (for example, in a multi-antenna case), a method for calculating a variation of the CSI between the two vectors cannot be directly used. In this case, an evaluation method between correlation matrices may be used instead to calculate the variation of the CSI. Alternatively, a manner in which a CSI matrix is converted into a CSI vector may be used. There are many conversion manners, and only one example is provided herein. For example, to convert a 4*4 matrix into a 1*16 vector, only a jth column needs to be arranged below a (j-1)th column (j>1). For example, to convert a 4*4 matrix into a 16*1 vector, only an ith row needs to be arranged after an (i-1)th row (i>1).

## 3. Threshold adjustment manner

For calculation of a variation of CSI, a uniform formula calculation method may be used, or a manner in which no specific formula is defined may be used. In the manner in which no specific formula is defined, different devices may use different methods for calculating the variation of the CSI, to facilitate personalized configuration. For a device having a relatively strong computing capability and storage capability, a more accurate method for calculating and evaluating the variation of the CSI is used. However, for a device having a relatively weak computing and storage capability, a rough method for calculating and evaluating the variation of the CSI is used.

When no specific formula is defined, to support a case in which a threshold (Threshold) is set to adjust a quantity of users for triggering the CSI to meet a specific threshold, although there is no specific CSI evaluation formula, CSI evaluation and calculation still need to follow a specific rule. For example, the following rules may be followed:

(1) A variation of the CSI obtained through evaluation needs to be normalized, for example, normalized to a range [0, 1],
(2) A larger calculated value of the variation of the CSI represents a greater variation of the CSI (increasing monotonically, or increasing strictly monotonically).

(3) A calculated value 0 of the variation of the CSI represents that the variation of the CSI is minimal or there is no change.

(4) A calculated value 1 of the variation of the CSI represents that the variation of the CSI is maximal.

Alternatively, the following rules may be followed:

(1) A variation of the CSI obtained through evaluation needs to be normalized, for example, normalized to a range [0, 1].

(2) A larger calculated value of the variation of the CSI represents a smaller variation of the CSI (decreasing monotonically, or decreasing strictly monotonically).

(3) A calculated value 0 of variation of the CSI represents that the variation of the CSI is maximal (when the evaluation rule is decreasing monotonically).

(4) A calculated value 1 of the variation of the CSI represents that the variation of the CSI is minimal or there is no change (when the evaluation rule is decreasing monotonically).

By specifying the foregoing rules, a larger threshold may be set to adjust a quantity of users who feed back met. For example, when the evaluation rule is defined as monotonically increasing, a larger threshold may be set to indicate a larger threshold of the variation of the CSI, to reduce a quantity of subsequently triggered users (where a quantity of users who feed back not met increases). Alternatively, a smaller threshold may be set to increase the quantity of the users who feed back the met. The foregoing calculated value may alternatively be represented as an evaluation value, an estimated value, or the like, and represents a same meaning, to be specific, reflects the variation of the CSI.

In conclusion, the foregoing descriptions are merely preferred embodiments of the technical solutions of this application, but are not intended to limit the protection scope of this application. Any modification, equivalent replacement, or improvement made without departing from the spirit and principle of this application shall fall within the protection scope of this application.

## Claims

1. A communication method, applied to a first communication apparatus, comprising:

   generating a first physical layer protocol data unit PPDU, wherein the first PPDU comprises a media access control MAC frame, and the MAC frame comprises a variation of a channel state; and
   sending the first PPDU to a second communication apparatus.

2. The method according to claim 1, wherein the first PPDU comprises a first field, and the first field indicates whether the variation of the channel state meets a threshold condition.

3. The method according to claim 1 or 2, further comprising:
   receiving a second PPDU from the second communication apparatus, wherein the second PPDU is used to trigger the first communication apparatus to provide a feedback.

4. The method according to claim 1 or 2, further comprising:
   receiving a second PPDU from the second communication apparatus, wherein the second PPDU indicates to provide a feedback when the variation of the channel state exceeds a threshold.

5. The method according to claim 3 or 4, wherein
   when a plurality of first communication apparatuses simultaneously provide feedback, the first communication apparatus distinguishes between the feedbacks by using a spatial stream or distinguishes between the feedbacks by using orthogonal frequency division multiple access OFDMA.

6. The method according to any one of claims 1 to 5, wherein
   evaluation of the variation of the channel state meets the following rules:

   a variation of channel state information CSI obtained through evaluation is normalized to a range [0, 1];
   a larger calculated value of the variation of the CSI represents a greater variation of the CSI;
   a calculated value 0 of the variation of the CSI represents that the variation of the CSI is minimal or there is no change; and
a calculated value 1 of the variation of the CSI represents that the variation of the CSI is maximal.

7. A communication method, applied to a second communication apparatus, comprising:

   receiving a first physical layer protocol data unit PPDU from a first communication apparatus, wherein the first PPDU comprises a media access control MAC frame, and the MAC frame comprises a variation of a channel state; and
   determining, based on the first PPDU, whether the variation of the channel state exceeds a threshold.

8. The method according to claim 7, wherein the first PPDU comprises a first field, and the first field indicates whether the variation of the channel state meets a threshold condition.

9. The method according to claim 7 or 8, further comprising:
   sending a second PPDU to the first communication apparatus, wherein the second PPDU is used to trigger the first communication apparatus to provide a feedback.

10. The method according to claim 7 or 8, further comprising:
    sending a second PPDU to the first communication apparatus, wherein the second PPDU indicates to provide a feedback when the variation of the channel state exceeds the threshold.

11. The method according to any one of claims 7 to 10, wherein
    evaluation of the variation of the channel state meets the following rules:

    a variation of channel state information CSI obtained through evaluation is normalized to a range [0, 1];
    a larger calculated value of the variation of the CSI represents a greater variation of the CSI;
    a calculated value 0 of the variation of the CSI represents that the variation of the CSI is minimal or there is no change; and
    a calculated value 1 of the variation of the CSI represents that the variation of the CSI is maximal.

12. A communication apparatus, comprising:

    a processing module, configured to generate a first physical layer protocol data unit PPDU, wherein the first PPDU comprises a media access control MAC frame, and the MAC frame comprises a variation of a channel state; and
    a transceiver module, configured to send the first PPDU to a second communication apparatus.

13. The apparatus according to claim 12, wherein the first PPDU comprises a first field, and the first field indicates whether the variation of the channel state meets a threshold condition.

14. The apparatus according to claim 12 or 13, wherein the transceiver module is further configured to receive a second PPDU from the second communication apparatus, and the second PPDU is used to trigger the first communication apparatus to provide a feedback.

15. The apparatus according to claim 12 or 13, wherein the transceiver module is further configured to receive a second PPDU from the second communication apparatus, and the second PPDU indicates to provide a feedback when the variation of the channel state exceeds a threshold.

16. The apparatus according to claim 14 or 15, wherein the processing module is further configured to: when a plurality of communication apparatuses simultaneously provide feedback, distinguish between the feedbacks by using a spatial stream, or distinguish between the feedbacks by using orthogonal frequency division multiple access OFDMA.

17. The apparatus according to any one of claims 12 to 16, wherein
    evaluation of the variation of the channel state meets the following rules:

    a variation of channel state information CSI obtained through evaluation is normalized to a range [0, 1];
    a larger calculated value of the variation of the CSI represents a greater variation of the CSI;
    a calculated value 0 of the variation of the CSI represents that the variation of the CSI is minimal or there is no change; and

a calculated value 1 of the variation of the CSI represents that the variation of the CSI is maximal.

18. A communication apparatus, comprising:

a transceiver module, configured to receive a first physical layer protocol data unit PPDU from a first communication apparatus, wherein the first PPDU comprises a media access control MAC frame, and the MAC frame comprises a variation of a channel state; and

a processing module, configured to determine, based on the first PPDU, whether the variation of the channel state exceeds a threshold.

19. The apparatus according to claim 18, wherein the first PPDU comprises a first field, and the first field indicates whether the variation of the channel state meets a threshold condition.

20. The apparatus according to claim 18 or 19, wherein the transceiver module is further configured to send a second PPDU to the first communication apparatus, and the second PPDU is used to trigger the first communication apparatus to provide a feedback.

21. The apparatus according to claim 18 or 19, wherein the transceiver module is further configured to send a second PPDU to the first communication apparatus, and the second PPDU indicates to provide a feedback when the variation of the channel state exceeds the threshold.

22. The apparatus according to any one of claims 18 to 21, wherein

evaluation of the variation of the channel state meets the following rules:

a variation of channel state information CSI obtained through evaluation is normalized to a range [0, 1];

a larger calculated value of the variation of the CSI represents a greater variation of the CSI;

a calculated value 0 of the variation of the CSI represents that the variation of the CSI is minimal or there is no change; and

a calculated value 1 of the variation of the CSI represents that the variation of the CSI is maximal.

23. A communication apparatus, wherein the communication apparatus comprises a unit configured to perform the method according to any one of claims 1 to 11.

24. A computer-readable storage medium, comprising a computer program or instructions, wherein when the computer program or the instructions are run on a computer, the method according to any one of claims 1 to 11 is performed.

25. A computer program product, wherein when the computer program product runs on a computer, the method according to any one of claims 1 to 11 is performed.

| | Null data packet announcement NDPA | Null data packet NDP | | Feedback request | | Feedback trigger | |
|---|---|---|---|---|---|---|---|

Sensing transmitter

Sensing receiver 1 — Station STA 1 Acknowledgment ACK — Feedback

Sensing receiver 2

Sensing receiver 3

Measurement phase — Reporting phase

FIG. 1a

| | Null data packet announcement NDPA | Null data packet NDP | | Feedback request | |
|---|---|---|---|---|---|

Sensing transmitter — Null data packet announcement NDPA — Null data packet NDP — Feedback request

Sensing receiver 1 — Feedback

Sensing receiver 2

Sensing receiver 3

Measurement phase — Reporting phase

FIG. 1b

Transmitter 101

Detection target 103

Direct signal 104

Receiver 102

Affected signal 105

FIG. 2

FIG. 3

FIG. 4a

FIG. 4b

EP 4 322 592 A1

FIG. 5

First communication
apparatus

Second communication
apparatus

S601: Second physical layer
protocol data unit PPDU

S602: Generate a first physical layer protocol
data unit PPDU including a first field

S603: First physical layer
protocol data unit PPDU

S604: Determine whether a change
degree of a channel state meets a
threshold condition

FIG. 6

| Legacy-short training field L-STF | Legacy-long training field L-LTF | Legacy signal field L-SIG | Repeated legacy signal field RL-SIG | Universal signal field U-SIG | Extremely high throughput signal field EHT-SIG | Extremely high throughput short training field EHT-STF | Extremely high throughput long training fields EHT-LTFs | Packet extension PE field |
|---|---|---|---|---|---|---|---|---|

FIG. 7a

| Legacy-short training field L-STF | Legacy-long training field L-LTF | Legacy signal field L-SIG | Repeated legacy signal field RL-SIG | High efficiency signal field HE-SIG-A | High efficiency short training field HE-STF | High efficiency long training field HE-LTF | Packet extension PE field |
|---|---|---|---|---|---|---|---|

FIG. 7b

| High throughput greenfield mode short training field HT-GF-STF | High throughput long training field HT-LTF 1 | High throughput signal field HT-SIG | High throughput long training field HT-LTF 2 |
|---|---|---|---|

FIG. 7c

| Legacy-short training field L-STF | Legacy-long training field L-LTF | Legacy signal field L-SIG | High throughput signal field HT-SIG | High throughput short training field HT-STF | High throughput long training field HT-LTF |
|---|---|---|---|---|---|

FIG. 7d

| Legacy-short training field L-STF | Legacy-long training field L-LTF | Legacy signal field L-SIG | Very high throughput signal field VHT-SIG-A | Very high throughput short training field VHT-STF | Very high throughput long training field VHT-LTF | Very high throughput signal field VHT-SIG-B |
|---|---|---|---|---|---|---|

FIG. 7e

| Legacy-short training field L-STF | Legacy-long training field L-LTF | Legacy signal field L-SIG |
|---|---|---|

FIG. 7f

FIG. 8a

| Sensing transmitter | Null data packet announcement NDPA | Null data packet NDP | | Feedback request | | |
| --- | --- | --- | --- | --- | --- | --- |
| Sensing receiver 1 | | | | | STA 1 feedback with configuration 1 | |
| Sensing receiver 2 | | | | | STA 2 feedback with configuration 2 | |
| Sensing receiver 3 | | | | | | |

Measurement phase — Reporting phase

FIG. 8b

| Sensing transmitter | Feedback request | Feedback trigger | | | Feedback trigger | |
| --- | --- | --- | --- | --- | --- | --- |
| Sensing receiver 1 | | | STA 1 feedback configuration 1 | | | |
| Sensing receiver 2 | | | | | | STA 2 feedback configuration 2 |
| Sensing receiver 3 | | | | | | |

Reporting phase

FIG. 8c

| Frame control | Duration | Address 1 | Address 2 | Address 3 | Sequence control | Address 4 | High efficiency control HT control | Frame body | Frame check sequence FCS |
|---|---|---|---|---|---|---|---|---|---|

Aggregation control A-Control

| Control list | Padding |
|---|---|

| Control identifier control ID | Control information | ... |
|---|---|---|

FIG. 9

EP 4 322 592 A1

| Sensing transmitter | Null data packet announcement NDPA | Null data packet NDP | | Feedback request | | | Feedback trigger | |
|---|---|---|---|---|---|---|---|---|
| Sensing receiver 1 | | | | | Met | | | Feedback |
| Sensing receiver 2 | | | | | Not met | | | |
| Sensing receiver 3 | | | | | | | | |

Measurement phase                    Reporting phase

FIG. 10a

FIG. 10b

FIG. 10c

EP 4 322 592 A1

| Sensing transmitter | Null data packet announcement NDPA | Null data packet NDP | | Feedback request | | | Feedback trigger | | |
|---|---|---|---|---|---|---|---|---|---|
| Sensing receiver 1 | | | | | Met (more information) | | | | Feedback |
| Sensing receiver 2 | | | | | Not met (more information) | | | | |
| Sensing receiver 3 | | | | | | | | | |

Measurement phase            Reporting phase

FIG. 10d

1100

1101

Processing unit

1102

Transceiver unit

FIG. 11

1200

1201

Processor/
Processing circuit

1203

Memory

Transceiver/
Transceiver interface

1202

FIG. 12

## INTERNATIONAL SEARCH REPORT

| International application No. |
| --- |
| **PCT/CN2022/088401** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

WPI; EPODOC; CNPAT; CNKI; 3GPP: 物理层协议数据单元, 媒体接入控制, 信道, 状态, 变化, 改变, 程度, 等级, 水平, 阈值, 门限, PPDU, MAC, chang+, degree, channel, sensing, variation, CSI, CQI, state, frame, threshold

**C. DOCUMENTS CONSIDERED TO BE RELEVANT**

| Category* | Citation of document, with indication, where appropriate, of the relevant passages | Relevant to claim No. |
| --- | --- | --- |
| X | WO 2014047766 A1 (HUAWEI TECHNOLOGIES CO., LTD. et al.) 03 April 2014 (2014-04-03)<br>description, page 13, line 1-page 16, line 4 | 1-25 |
| A | CN 107979402 A (HUAWEI TECHNOLOGIES CO., LTD.) 01 May 2018 (2018-05-01)<br>entire document | 1-25 |
| A | CN 107852617 A (PANASONIC INTELLECTUAL PROPERTY MANAGEMENT CO., LTD.) 27 March 2018 (2018-03-27)<br>entire document | 1-25 |
| A | ZTE et al. "Beam Selection and CSI Acquisition for NR MIMO"<br>*3GPP TSG RAN WG1 Meeting #87, R1-1611417,*<br>Vol. , No. , 18 November 2016 (2016-11-18),<br>ISSN: ,<br>entire document | 1-25 |
| A | US 2012195213 A1 (ZTE CORP.) 02 August 2012 (2012-08-02)<br>entire document | 1-25 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **11 July 2022** | **20 July 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/088401**

| Patent document cited in search report | | | Publication date (day/month/year) | Patent family member(s) | | | Publication date (day/month/year) |
|---|---|---|---|---|---|---|---|
| WO | 2014047766 | A1 | 03 April 2014 | CN | 103858468 | A | 11 June 2014 |
| CN | 107979402 | A | 01 May 2018 | EP | 3528395 | A1 | 21 August 2019 |
| | | | | US | 2019253184 | A1 | 15 August 2019 |
| | | | | WO | 2018076788 | A1 | 03 May 2018 |
| CN | 107852617 | A | 27 March 2018 | US | 2021058204 | A1 | 25 February 2021 |
| | | | | CN | 113992246 | A | 28 January 2022 |
| | | | | CN | 114143894 | A | 04 March 2022 |
| | | | | EP | 3345422 | A1 | 11 July 2018 |
| | | | | CN | 114143895 | A | 04 March 2022 |
| | | | | EP | 3749004 | A1 | 09 December 2020 |
| | | | | JP | 2018525900 | A | 06 September 2018 |
| | | | | US | 2018167177 | A1 | 14 June 2018 |
| | | | | JP | 2022016665 | A | 21 January 2022 |
| | | | | WO | 2017037994 | A1 | 09 March 2017 |
| US | 2012195213 | A1 | 02 August 2012 | EP | 2458748 | A1 | 30 May 2012 |
| | | | | CN | 101998497 | A | 30 March 2011 |
| | | | | IN | 1516DEN2012 | A | 05 June 2015 |
| | | | | WO | 2011020258 | A1 | 24 February 2011 |
| | | | | JP | 2013502760 | A | 24 January 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110456293
- CN 202110727648